Europäisches Patentamt

European Patent Office

Office européen des brevets

(11) Publication number : **0 648 800 A2**

(19)

## (12) EUROPEAN PATENT APPLICATION

(21) Application number : **94307621.6**

(22) Date of filing : **18.10.94**

(51) Int. Cl.⁶ : **C08J 3/28, C08J 3/075**

(30) Priority : **19.10.93 JP 260868/93**
**19.10.93 JP 260869/93**
**19.10.93 JP 260870/93**

(43) Date of publication of application :
**19.04.95 Bulletin 95/16**

(84) Designated Contracting States :
**DE FR GB**

(71) Applicant : **NIPPON SHOKUBAI CO., LTD.**
**1-1, Koraibashi, 4-chome**
**Chuo-ku, Osaka-shi, Osaka-fu 541 (JP)**

(72) Inventor : **Hatsuda, Takumi**
**389-23 Uohashi,**
**Amida-cho**
**Takasago-shi, Hyogo-ken (JP)**
Inventor : **Harada, Nobuyuki**
**3-1007 4-41 Yamadahigashi,**
**Suita-shi**
**Osaka-fu (JP)**

(74) Representative : **Rees, David Christopher et al**
**Kilburn & Strode**
**30 John Street**
**London WC1N 2DD (GB)**

(54) Method for production of absorbent material and absorbent article.

(57) A method for the production of an absorbent material vested with ideal absorption characteristics, i.e. absorption speed and absorption capacity, and possessed of the quality of being cut in desired size or shape and fixed fast in desired place and an absorbent article formed of the absorbent material and manifesting high flexibility and high safety are provided.The method of production obtains the absorbent material by irradiating a planar agglomerate of absorbent resin particles with an activated energy ray and the absorbent article contains the absorbent material in a bag having at least one side wall thereof formed of a water-pervious sheet.

## FIGURE

EP 0 648 800 A2

This invention relates to a method for the production of a novel absorbent material and an absorbent article. Particularly, this invention relates to a method for the production of an absorbent material which, on contact with an aqueous liquid such as water or humor, absorbs the aqueous liquid and swells therewith to a great extent and to an absorbent article made thereof. More particularly, this invention relates to absorbent articles which are excellent in capacity for absorption, speed of absorption, and safety of use and preeminently excellent in the aspect of energy cost factor and, therefore, advantageously usable in such sanitary and medical articles as sanitary napkins and disposable diapers, in such agricultural and forestal articles as are used for preserving vegetables and meats in fresh state and for absorbing drips emanating from such perishable foods, and in various fields required for absorbing water and retaining absorbed water.

The absorbent material mentioned above is useful by itself. It is also useful in sanitary materials, sheets for formation of dew and absorption of water, agricultural water retaining agents, water retaining agents in civil engineering structures, medical sheets, agents for preserving foodstuffs in fresh state, and absorbents for drips oozing from perishable foodstuffs.

Description of the Prior Art:

As absorbent resins, partially neutralized cross-linked polyacrylic acids, saponified acrylic ester-vinyl acetate copolymers, modified cross-linked polyvinyl alcohols, cross-linked isobutylene-maleic anhydride copolymers, hydrolyzed starch-acrylonitrile graft polymer, starch-acrylic acid graft polymer, and partially cross-linked polyethylene oxide have been heretofore known to the art. These absorbent resins have found extensive utility in a wide range of applications including sanitary absorbents such as sanitary napkins and disposable diapers in the hygienic field and water-retaining agents and dehydrating agents in the agricultural field and the civil engineering field.

The absorbent resins thus used are generally in a powdery form or a granular form. In most cases of actual use, the powdery or granular absorbent resin is sandwiched between layers of paper, incorporated in pulp and compacted as by an operation of embossing, or fused and enveloped with a thermoplastic resin so as to be finished in the form of a sheet or a film.

Various methods have been heretofore proposed for the purpose of causing an absorbent resin to be deposited fast on a substrate thereby enabling it to be utilized in the form of a sheet. These methods can be roughly divided into two types, i.e. those of one type which first produce an absorbent resin and then shape it in the form of a sheet and those of the other type which simultaneously effect the production of an absorbent resin and the shaping thereof in the form of a sheet. The methods of the former type include (A) a method which superposes an absorbent resin powder in the form of a sheet on a substrate and subjects the superposed layers to a treatment for fast adhesion and (B) a method which shapes a fibrous absorbent resin in the form of a sheet. The method of (B) is not very practicable because the production of the fibrous absorbent resin itself is unduly expensive and the produced absorbent sheet is deficient in ability of absorption.

For the treatment of fast adhesion in the method of (A), a method which comprises scattering an absorbent resin powder on a substrate sheet, superposing another sheet on the scattered layer of the absorbent resin powder, and embossing the superposed layers, a method which comprises mixing a substrate sheet with an absorbent resin powder and embossing the resultant mixture, a method which comprises imparting a small amount of water to an absorbent resin powder thereby realizing fast adhesion between the absorbent resin powder and a substrate sheet (USP 3,959,569, JP-A-51-40,497, JP-A-54-123,293, JP-A-54-141,099, and JP-A-58-36,452, for example), and a method which comprises using a resin binder thereby realizing fast adhesion of an absorbent resin powder to a substrate sheet (JP-A-58-101,047, JP-A-04-504,234, and USP 5,128,082, for example) have been available. Besides, JP-A-1-230,671 discloses a method for immobilizing an absorbent resin by combining the absorbent resin with an aqueous liquid thereby giving rise to a hydrate.

These methods which are directed to the formation of an absorbent material in the form of a sheet, however, have several problems. For example, the process of combining a substrate with an absorbent resin powder to form a composite is troublesome, deficient in productivity, and liable to jeopardize the work environment because of the possible drifting of the powder and the produced absorbent material tends to be deficient in strength or softness. Since the amount of an absorbent resin distributed in a sheet per unit surface area is not allowed to be increased, the produced absorbent material absorbs an aqueous liquid either in an unduly small amount or at an unduly low speed. If the amount of an absorbent resin per unit surface area is increased at all, the produced absorbent material will acquire unduly high hardness and suffer from accidental spillage of the absorbent resin powder. For the purpose of solving the problem of spillage of the absorbent resin from the substrate, several methods have been proposed which generally comprise directly polymerizing a monomer on a substrate sheet thereby simultaneously attaining the production of an absorbent resin and the shaping thereof in the form of a sheet. They are disclosed in JP-A-60-149,609, JP-A-62-53,309, JP-A-62-62,829, and JP-A-62-97,979, for example. These methods, however, invariably entail the following drawbacks. The possibility that a polymerization initiator and other additives and the monomer to be used for the polymerization will remain unaltered in relatively large proportions after the polymerization is high. If these unaltered substances have dubious safety, they will pose a problem when the produced absorbent material is used for sanitary articles or articles destined to contact with foodstuffs. The reaction involved in the polymerization permits no easy control and suffers from poor productivity. Further, the produced sheet-like absorbent material encounters the restriction imposed on its own swelling by the substrate, suffers from deficiency in capacity for absorption, and betrays inferiority in the flexibility, so-called sensation of softness.

EP-A-443,627 proposes an absorbent article which attains an increase in the amount of an absorbent resin by using an absorbent resin endowed with an exalted speed of absorption. It is suspected that if a fibrous matrix which is intended to play the part of immobilizing a granular absorbent resin as proposed in EP-A-443,627 is used in a small amount or is not used at all, the absorbent resin contained in the absorbent article will migrate or gather locally. Thus, this absorbent article necessitates a new device for having the absorbent resin to be immobilized at a prescribed position until it discharges the role of absorbing a given aqueous liquid and swelling with the absorbed liquid. If an absorbent resin is to be used in the form of a dry powder, it will be handled with great difficulty because it is quite apt to leak or drift in the air owing to the minuteness of size. This fact seriously impairs the stability of operation in a mechanical quantity production.

WO91/15362 discloses a porous absorbent high-molecular macrostructure which is capable of assuming the form of a sheet, a film, and a strip, etc. This macrostructure possesses a high speed of absorption and retains the geometric shape thereof intact after absorbing an aqueous liquid and permits solution of the problems encountered by the conventional techniques as described above. Since this macrostructure requires to use as an essential component thereof an intergranular cross-linking agent and cause it to take part in the reaction, however, the process of manufacture thereof is troublesome and deficient in productivity. The technique of irradiating an absorbent resin with an activated energy ray such as electron beam or a radiation has been well known to the art by its disclosure in JP-A-63-43,930 and JP-A-59-129,232, for example. Since the absorbent resin which is obtained by this method is in the form of particles, however, the problem which inherently attends on a granular absorbent resin as described above persists in the present absorbent resin.

The need to develop a compact and thin absorbent article which possesses an ideal capacity for absorption and an absorbent material which is used for the production of the absorbent article is felt. Thus, the appearance of an absorbent material possessing a sufficient capacity for absorption, exhibiting a high speed of absorption, and enabling an absorbent resin to be retained fast at a prescribed position before and after absorbing an aqueous liquid has been longed for.

With respects to an absorbent article using absorbent resin particles as an absorbing material, various applications of absorbent resin particles have been heretofore known. JP-B-57-56,561, for example, discloses an absorbent material containing dry absorbent resin particles. JP-A-59-204,956 discloses an absorbent structure which is formed of a compressed mixture of absorbent resin particles dried to a water content of up to 10% by weight with ground pulp. JP-A-57-73,051 discloses an immobilized absorbent composition consisting of a liquid polyhydroxy compound and dry absorbent resin particles. JP-A-56-131,683 and JP-A-58-131,133 disclose an absorbent article which is obtained by softening dry absorbent resin particles with water, applying the resultant softened mass of absorbent resin to a substrate, and then drying the applied layer of wet absorbent resin. JP-A-01-230,671 discloses an absorbent hydrate which comprises a mixture of dry absorbent resin particles with an aqueous liquid. Further, JP-A-04-236,203 discloses an absorbent article which contains a sheetlike hydrogel obtained by polymerization.

The absorbent articles which have been heretofore known to the art, however, entail several problems. When the dry absorbent polymer constituting the principal component of the absorbent material for the absorbent article is specifically taken into account, for example, a step of drying the hydrate of an absorbent cross-linked polymer obtained by polymerizing an aqueous solution of a monomer capable of being converted into an absorbent polymer by polymerization to a water content of not more than 20%, which is a highest allowable water content for the dried hydrate to be handled as a powder, and a step of pulverizing or disintegrating the resultant dry mass into a powdery form prove to be indispensable. These steps consume a huge amount of energy such as to boost the cost of the absorbent polymer. The drying step for lowering the water content to below 20% inevitably entails deterioration of the polymer and induces an increase of the content of solubles in the polymer. Thus, the various absorption characteristics are inevitably impaired.

When the absorbent article containing the dried absorbent resin is mainly taken into account instead, the incorporation of the dried absorbent resin in the absorbent article necessitates a step and a device for handling the absorbent resin particles in a dry state undesirable from the standpoint of a work environment. Further, the immobilization of the dried absorbent resin particles as an absorbent material in the absorbent article necessitates an extra step of softening the dry resin particles with water and drying the wet resin particles and compressing the dry mass of resin particles. Thus, the complexity of process and apparatus for the production of the absorbent article has persisted. For the solution of these problems, JP-A-04-236,203 suggests a method which comprises directly inserting into an absorbent article a sheetlike absorbent cross-linked polymer obtained in the form of a hydrogel by polymerization under specific conditions. Since the sheetlike hydrogel-like absorbent cross-linked polymer has a small surface area as compared with the heretofore known powdery absorbent cross-linked polymer, it has a low speed of absorption. An attempt to increase the surface area necessitates an operation of shaping this polymer as in the form of a film. If the polymer is shaped in the form of a film at all, the absorbent polymer after absorbing an aqueous liquid and assuming a swelled state is devoid of an empty space for migration of liquid or an empty space for swelling. The produced absorbent article, therefore, is deficient in capacity for absorption or speed of absorption and is also unsatisfactory from the standpoint of flexibility.

An object of this invention, therefore, is to provide a method for the production of a novel absorbent material and an absorbent article.

A further object of this invention is to provide a method for the production of an absorbent material possessing an ideal ability of absorption (speed of absorption and capacity for absorption), having the absorbent resin retained fast at a prescribed position before and after absorbing an aqueous liquid, allowing itself to be cut in desired size and shape, and enjoying high safety. Another object of this invention is to provide a method for production which enables the absorbent material to be obtained easily and conveniently at high productivity with the quality of the product easily controlled.

Yet another object of this invention is to provide a compact and thin absorbent article by the use of the absorbent material. Still another object of this invention is to provide an absorbent article which possesses excellent absorption characteristics, enjoys the merits of compactness and thinness, keeps the absorbent polymer fast in place, retains flexibility even when the absorbent material contains the absorbent polymer in a large amount, and excels in economy.

These objects are accomplished by a method for the production of an absorbent material which is characterized by irradiating a planar agglomerate of absorbent resin particles with an activated energy ray.

This invention also concerns the aforementioned method for the production of the absorbent material, wherein the planar agglomerate of absorbent resin particles is obtained by performing sequentially (al) a step of spreading a granular absorbent resin in a planar form of a thickness controlled in the approximate range of 0.3 to 5 mm on a supporting material and (b1) a step of adding to the planar mass of absorbent resin particles formed at the step of (a1) and kept intact in the agglomerated form at least one member selected from the group consisting of water and steam in an amount in the range of 10 to 150 parts by weight, based on 100 parts by weight of the absorbent resin.

This invention further concerns the aforementioned method for the production of the absorbent material, wherein the planar agglomerate of absorbent resin particles is obtained by performing sequentially (a2) a step of spreading a granular absorbent resin in a planar form of a thickness controlled in the approximate range of 0.3 to 5 mm on a supporting material and (b2) a step of adding to the planar mass of absorbent resin particles formed at the step of (a2) and kept intact in the agglomerated form 3 to 30 parts by weight of water and 5 to 50 parts by weight of polyhydric alcohol, based on 100 parts by weight of the absorbent resin.

This invention also concerns the aforementioned method for the production of the absorbent material, wherein the planar agglomerate of absorbent resin particles is obtained by performing sequentially (a3) a step of mixing 1 to 10 parts by weight of polyhydric alcohol with 100 parts by weight of the granular absorbent resin, (b3) a step of dry mixing the mixture obtained at the step of (a3) with hydrophilic fibers at a ratio in the range of 1 to 30 parts by weight of the hydrophilic fibers based on 100 parts by weight of the absorbent resin in the mixture, and (c3) a step of pneumatically molding the mixture obtained at the step of (b3) in the form of a sheet.

This invention concerns the aforementioned method for the production of the absorbent material, wherein the planar agglomerate of absorbent resin particles is obtained by adding to the sheetlike mass obtained in consequence of the steps mentioned above at least one member selected from the group consisting of water and steam in an amount in the range of 10 to 150 parts by weight, based on 100 parts by weight of the absorbent resin in the sheetlike mass.

This invention also concerns the aforementioned method for the production of the absorbent material, wherein the planar agglomerate of absorbent resin particles is obtained by performing sequentially (a4) a step of mixing 1 to 10 parts by weight of polyhydric alcohol with 100 parts by weight of the granular absorbent resin and (b4) a step of casting the mixture obtained at the step of (a4) in a planar form of a thickness controlled in the approximate range of 0.3 to 5 mm on a supporting material.

This invention further concerns the aforementioned method for the production of the absorbent material, wherein the planar agglomerate of absorbent resin particles is obtained by adding to the planar mass of absorbent resin particles formed through the aforementioned steps and kept intact in the agglomerated form at least one member selected from the group consisting of water and steam in an amount in the range of 10 to 150 parts by weight, based on 100 parts by weight of the absorbent resin in the planar agglomerate of absorbent resin particles.

This invention also concerns the aforementioned method for the production of the absorbent material, wherein the planar agglomerate of absorbent resin particles contains 10 to 70% by weight of water, based on the total weight of the planar agglomerate of absorbent resin particles. This invention further concerns the aforementioned method for the production of the absorbent material, wherein the planar agglomerate of absorbent resin particles is obtained by molding a granular hydrogel-like polymer obtained by polymerization and possessed of an ability to absorb an aqueous liquid.

This invention also concerns the aforementioned method for the production of the absorbent material, wherein the planar agglomerate of absorbent resin particles is obtained by performing sequentially (a5) a step of molding a granular hydrogel-like polymer produced by polymerization and possessed of an ability to absorb an aqueous liquid in a planar form of a thickness controlled in the approximate range of 0.3 to 20 mm on a supporting material and (b5) a step of decreasing the water content of the hydrogel-like polymer obtained at the step of (a5) and kept intact in the aggregated form by at least 10% by weight thereby giving rise to an agglomerate of hydrogel-like polymer having a water content in the range of 20 to 70% by weight. This invention concerns the aforementioned method for the production of the absorbent material, wherein the hydrogel-like polymer has an average particle diameter in the range of 50 to 2,000μm on dry basis. This invention further concerns the aforementioned method for the production of the absorbent material, wherein the activated energy ray is at least one member selected from the group consisting of gamma ray and electron beam.

The objects described above are further accomplished by an absorbent article characterized by containing the absorbent material obtained by the aforementioned method of production in a bag member having at least one side wall thereof formed of a water-pervious sheet.

Figure is a cross section of a device used in the present invention for determining the absorption capacity under a load.

The absorbent resin particles to be used in this invention are a granular absorbent resin which has no particular restriction except for the requirement that it should be capable of absorbing water or an aqueous liquid and swelling the volume thereof. They are generally obtained by polymerizing a water-soluble unsaturated monomer. As concrete examples of the water-soluble unsaturated monomer, anionic monomers such as (meth)acrylic acids, maleic acid (anhydride), fumaric acid, crotonic acid, itaconic acid, 2-(meth)acryloyl ethanesulfonic acids, 2-(meth)acryloyl propanesulfonic acids, 2-(meth)acrylamide-2-methyl propanesulfonic acids, vinyl sulfonic acid, and styrene sulfonic acid and salts of the anionic monomers; nonionic hydrophilic group-containing monomers such as (meth)acrylamides, N-substituted (meth)acrylamides, 2-hydroxyethyl methacrylate, 2-hydroxypropyl (meth)acrylates, methoxypolyethylene glycol (meth)acrylates, and polyethylene glycol (meth)acrylates; and amino group-containing unsaturated monomers such as N,N-dimethyl aminopropyl methacrylate, N,N-dimethyl aminoethyl (meth)acrylates, and N,N-dimethyl aminopropyl (meth)acrylamides and the quaternary products thereof may be cited.

The monomer component for polymerization into the granular absorbent resin may contain a hydrophobic monomer such as an acrylic ester like metheyl (meth)acrylate, ethyl (meth)acrylate, or butyl (meth)acrylate, or vinyl acetate, or vinyl propionate in an amount not so large as to impair notably the hydrophilicity of the produced polymer. In the monomer component, one member or a mixture of two or more members selected from the group of hydrophobic monomers mentioned above may be used. With due respect to the absorption characteristics of the finally produced absorbent material, it is desirable to adopt at least one member selected from the group consisting of (meth)acrylic acid (salts), 2-(meth)acryloyl ethanesulfonic acid (salts), 2-(meth)acrylamide-2-methyl propanesulfonic acid (salts), (meth)acrylamides, methoxy polyethylene glycol (meth)acrylates, N,N-dimethyl aminoethyl(meth)acrylates, and the quaternary products thereof. More desirably, the monomer component uses (meth)acrylic acid (salt) as an essential content. In this case, it is most desirable that the (meth)acrylic acid should have 30 to 90 mol% thereof neutralized with a basic substance. The absorbent resin is desired to have an absorption capacity in the approximate range of 20 to 60/g as determined by the tea bag method in the physiological saline solution. The proportion of the uncrosslinked component or the so-called water-soluble component in the absorbent resin is desired to be not more than 20% by weight, more preferably not most than 10% by weight, and more preferably not more than 5% by weight.

The absorbent resin to be used in this invention may be of the self-crosslinking type which is obtained without using a cross-linking agent or of the type which is obtained by using a cross-linking agent containing a polymeric unsaturated group and/or a reactive functional group in an amount not so large as to prevent the various properties of the produced absorbent resin particles from reaching the standards mentioned above.

As concrete examples of the cross-linking agent, N,N'-methylene bis(meth)acrylamides, (poly)ethylene glycol di(meth)acrylates, glycerin tri(meth)acrylates, trimethylol propane tri(meth)acrylates, triallyl amine, triallyl cyanurate, triallyl isocyanurate, glycidyl methacrylate, (poly)ethylene glycol, diethylene glycol, (poly)glycerin, propylene glycol, diethanol amine, trimethylol propane, pentaerythritol, (poly)ethylene glycol diglycidyl ether, (poly)glycerol polyglycidyl ether, epichlorohydrin, ethylene diamine, polyethylene imine, (poly)aluminum chloride, aluminum sulfate, calcium chloride, and magnesium sulfate may be cited. One member or a combination of two or more members selected from the group of cross-linking agents cited above in due consideration of reactivity can be used.

In the production of the absorbent resin, the monomer component mentioned above may be polymerized in the presence of such a hydrophilic macromolecular compound as starch, cellulose, or polyvinyl alcohol so as to effect formation of a graft linkage or a complex simultaneously with the polymerization.

The polymerization of the monomer component can be initiated by the use of a water-soluble radical polymerization initiator such as ammonium persulfate, potassium persulfate, hydrogen persulfide, t-butyl hydroperoxide, or 2,2'-azo-bis-amidinopropane dihydrochloride. The method for implementing this polymerization is not limited in any respect. Any of the well-known methods such as, for example, the bulk polymerization, the aqueous solution polymerization, and the reversed-phase suspension polymerization may be used.

The absorbent resins cited above can be used either singly or in the form of a combination of two or members.

The granular shape of the absorbent resin particles to be used in this invention is not particularly limited. The absorbent resin particles may be in the form of flakes which are obtained by drying the absorbent resin in a drum or in the form of an amorphous mass which is obtained by pulverizing lumps of resin. They may be in the form of spheres which are obtained by subjecting the monomer component to the reversed-phase suspension polymerization. Generally, the particles which are obtained by the reversed-phase suspension polymerization retain a dispersant or a surfactant on their surface. When the resin particles are in this state, it sometimes proves desirable to deprive the particles of the dispersant or the surfactant remaining on their surface or subject the particles to additional pulverization before they are put to use in this invention. These particles may be shaped like bars, fibers, or other similar objects which have a major diameter and a minor diameter.

The absorbent resin particles to be used in this invention are only required to be in a granular form such as to allow attainment of the objects of this invention. Their grain size is not particularly limited. For the absorbent material to gain a high speed of absorption, the absorbent resin particles are desired to include substantially no particles having an average particle diameter exceeding 1,000μm, preferably 850μm. The speed of absorption generally can be increased by decreasing the average particle diameter of the absorbent resin particles. If the absorbent resin particles contain particles not more than 150μm in diameter in an unduly large proportion, however, they will possibly be compelled to sacrifice the convenience of handling or entail the so-called phenomenon of gel blocking.

The absorbent resin particles to be used in this invention are sometimes desired to have a narrow grain size distribution. By using absorbent resin particles which have such a grain size distribution that the particles of 600μm to 150μm in diameter account for a proportion of not less than 80% by weight, preferably not less than 90% by weight, or the particles of 300μm to 150μm in diameter account for a proportion of not less than 80% by weight, preferably not less than 90% by weight, the produced absorbent material is possibly enabled to acquire a higher speed of absorption and manifest a more desirable shape retaining property after absorbing an aqueous liquid.

In this invention, for the purpose of producing an absorbent material having a high speed of absorption, it is desirable to use absorbent resin particles which manifest a large capacity for absorption under load. The method for determining the capacity for absorption under load will be described hereinbelow. This capacity is desired to be such that the absorbent resin particles may absorb at least 20 ml, desirably at least 24 ml, and more desirably at least 28 ml, of an aqueous 0.9 wt% saline solution per g. of resin particles under load of at least 20 g/cm². The absorbent material produced from absorbent resin particles whose capacity for absorption under load is larger than a specific value is particularly excellent in speed of absorption. The absorbent resin particles whose capacity for absorption under load is large as described above are obtained, for example, from such absorbent resin particles as will be specifically described hereinbelow by having their surface subjected to a cross-linking treatment.

Sometimes, the absorbent resin particles to be used for this invention are desired to have undergone the treatment for surface cross-linking. An absorbent material particularly excellent in the speed of absorption can be obtained by using absorbent resin particles which have been produced by mixing precursory absorbent resin particles with a cross-linking agent possessing a group capable of reacting with at least two functional groups possessed by the particles and causing them to react thereby heightening the cross-link density in the surfacial region of the absorbent resin particles. The absorbent resin particles having a cross-linked surfacial region can be obtained by subjecting absorbent resin particles to such surface treatments as are known to the art in association with a method using a polyhydric alcohol (JP-A-58-180,233 and JP-A-61-16,903), a method using a polyglycidyl compound, a polyaziridine compound, a polyamine compound, or a polyisocyanate compound (JP-A-59-189,103), a method using glyoxal (JP-A-52-117,393), a method using a polyvalent metal (JP-A-51-136,588, JP-A-61-257,235, and JP-A-62-7,745), a method using a silane coupling agent (JP-A-61-211,305, JP-A-61-252,212, and JP-A-264,006), a method using an epoxy compound and a hydroxy compound (JP-A-02-132,103), and a method using an alkylene carbonate (DE-A-40207809) severally as a cross-linking agent. Besides, a method effecting the cross-linking reaction in the presence of an inert inorganic powder (JP-A-60-163,956 and JP-A-60-255,814), a method effecting the reaction in the presence of a dihydric alcohol (JP-A-01-292,004), and a method effecting the reaction in the presence of water and an ether compound (JP-A-02-153,903) have been known to the art.

The absorbent resin particles to be used in this invention may contain such auxiliaries as water-insoluble minute particles, a surfactant, and short fibers in an amount not so large as to impede aggregation. The incorporation of these auxiliaries possibly serves the purpose of enabling the absorbent resin of this invention to acquiring a heightened speed of absorption. As concrete examples of the surfactant, polyoxyethylene alkyl ethers, polyoxyethylene alkylphenol ethers, sorbitan fatty esters, polyoxyethylene sorbitan fatty esters, polyoxyethylene acyl esters, oxyethylene-oxypropylene block copolymers, and sucrose fatty esters may be cited. As concrete examples of the water-insoluble inorganic minute particles, mica, pyrophyllite, kaolinite, hulsite, and other similar clayish minerals, and minute silica grains such as Aerosil 200 (produced by Japan Aerosil Ltd.) consisting mainly of silicon dioxide particles having an average particle diameter of not more than 50μm and Carplex#80 (produced by Shionogi & Co., Ltd.) may be cited. As concrete examples of the water-insoluble organic minute particles, carbon black, activated carbon, and pulp powder may be cited. Among other auxiliaries mentioned above, minute silica grains prove to be particularly desirable because they are highly effective in heightening the speed of absorption. The amount of the auxiliary of this nature to be used is in the range of 0.1 to 10 parts by weight, desirably 0.5 to 5 parts by weight, and more desirably 0.5 to 2 parts by weight, based on 100 parts by weight of the absorbent resin. If this amount exceeds 10 parts by weight, the excess will not bring about a proportional addition to the effect. On the contrary, this excess will induce a decrease in the capacity for absorption and will possibly render the formation of an agglomerate difficult. If the amount is less than 0.1 part by weight, the effect of the use of the auxiliary will not be obtained.

In this invention, the absorbent resin particles have been already agglomerated in a planar form when they are irradiated with an activated energy ray. Though the water content of the absorbent resin particles at this time is not particularly limited, the hydrated absorbent resin particles are desired to have a water content in the range of 10 to 70% by weight, based on the total weight of the absorbent resin particles. The absorbent material possessing flexibility can be obtained by causing the absorbent resin particles possessing a water content in the range mentioned above to be agglomerated in a planar form and irradiated per set with an activated energy ray. If the water content deviates from the range mentioned above, the produced absorbent material will possible manifest a poor shape retaining property during the absorption of an aqueous liquid. The range of the water content is desirably in the range of 15 to 60% by weight and more desirably 20 to 50% by weight.

The expression "agglomerated in a planar form" as used in the present invention refers to the state in which numerous absorbent resin particles originally in a discrete form are brought into physical contact with one another and allowed to form a planar agglomerate. Specifically, they are not held in an agglomerated form through the medium of a third substance such as an adhesive agent or a fibrous substrate but held in a continuously agglomerated form owing to the direct adhesion of the adjacent absorbent resin particles.

The agglomerate in the planar form contemplated by the present invention can be physically handled as one-piece mass because the absorbent resin particles produce the agglomerated form by being directly adjoined to one another.

If absorbent resin particles having a water content of 15% are simply scattered in a molding frame of a prescribed size placed on a flat surface, for example, they will not assume the state of aggregation in a planar form which is contemplated by the present invention because they physically remain to be a collection of numerous discrete absorbent resin particles.

The term "planar" as used in this invention refers to the assumption of an at least partly continuous plane. Thus, the plane may contain one or more through holes of a desired shape, for example. The planar agglomerate may be waved or puckered. It may be shaped like a ribbon, a cord, a strip, etc. It is desired to have on one (obverse or reverse) side thereof an area of not less than 5 cm$^2$, preferably not less than 10cm$^2$, and more preferably not less than 15 cm$^2$.

As concrete examples of the activated energy ray to be used in this invention, an ultraviolet light, an electron beam, and a radiation may be cited. This activated energy ray is desired to possess a high permeating power. In this respect, the gamma ray or the electron beam proves to be desirably chosen and the gamma ray may be more desirably chosen.

In the method of production involved in this invention, the dosage of the activated energy ray is generally in the range of 1 to 1000 kGy, preferably 10 to 500 kGy, though variable with such factors as the water content of the absorbent resin, the kind of the resin, and the atmosphere used for the irradiation. If the dosage exceeds 1000 kGy, the produced absorbent material will tend to acquire an unduly small capacity for absorption of the aqueous liquid. Conversely, if the dosage is less than 1 kGy, the produced absorbent material will possibly manifest an inferior shape retaining property after absorbing an aqueous liquid.

One of the preferred embodiments of this invention produces the planar agglomerate of absorbent resin particles by performing sequentially (a1) a step of spreading a granular absorbent resin in a planar form of a thickness controlled in the approximate range of 0.3 to 5 mm on a supporting material and (b1) a step of adding to the planar mass of absorbent resin particles formed at the step of (a1) and kept intact in the agglomerated form and/or steam in an amount in the range of 10 to 150 parts by weight, based on 100 parts by weight of the absorbent resin.

If the thickness at the step of (a1) is less than about 0.3 mm, the spreading of the granular absorbent resin in the planar form will be difficult to attain and the produced absorbent material will tend to acquire unduly low strength or allow no easy handling. Further, the amount of the absorbent resin per unit surface area will be unduly small and the produced absorbent material will manifest an unduly low speed of absorption. For the thickness to be sufficient, the absorbent resin particles are generally required to be agglomerated at a density of not less than 200 g/m², preferably not less than 250 g/m², and more preferably not less than 300 g/m². Conversely, if the thickness exceeds about 5 mm, the formation of the planar agglomerate of absorbent resin by the addition of water and/or steam will necessitate a conspicuously long time and the produced absorbent material will rather suffer from a decrease than enjoy an increase in the speed of absorption of an aqueous liquid. The desirable thickness of the planar agglomerate of granular absorbent resin is in the range of 0.5 to 3 mm.

The expression "(b1) a step of adding water and/or steam to the absorbent resin particles spread in a controlled thickness as kept in the planar form" means that the addition of water and/or steam to the absorbent resin particles is to be carried out in such a state that substantially no shear force may be exerted on the absorbent resin particles. It is accomplished, for example, by a method which comprises spraying water on the absorbent resin particles spread in a thickness controlled in the approximate range of 0.3 to 5 mm, a method which comprises exposing the absorbent resin particles similarly spread to saturated steam, a method which comprising retaining a supporting material having the absorbent resin particles spread thereon in an atmosphere having a relative humidity of not less than 50%. If the contact of the absorbent resin particles with the added water is not uniform, the planar agglomerate will not be always obtained with ample homogeneity. The planar agglomerate of homogeneous texture is infallibly obtained, for example, by tightly sealing the planar agglomerate after contact thereof with the water thereby precluding the otherwise possible vaporization of the added water and then allowing the sealed planar agglomerate to stand at a temperature preferably exceeding 30°C. During the addition of the water to the absorbent resin particles, the mixture being formed ought to be kept from such a shearing force as is apt to combine the absorbent resin particles with the added water and stir them. If the shearing force is exerted, the produced absorbent material will encounter the disadvantage of losing the speed of absorption of an aqueous liquid. In this case, the absorbent resin particles tend to form lumps. With these lumps, it is difficult to form the planar agglomerate which is aimed at by the present invention. It is not impossible to produce the planar agglomerate from these lumps when an extruding device is properly used, for example. The operation involved in this case, however, not only consumes an unusually large amount of energy but also compels the absorbent resin particles to undergo mutual adhesion possibly to the extent of causing extinction of their boundaries and integration into lumps. The absorbent material which results from this operation is liable to suffer from a serious decrease of the speed of absorption.

The amount of water to be added to the absorbent resin particles at the step of (b1) is in the range of 10 to 150 parts by weight, based on 100 parts by weight of the absorbent resin particles. If this amount exceeds 150 parts by weight, the absorbent material will have a low absorbent resin content and, therefore, will suffer from a decrease in the capacity for absorption of an aqueous liquid and a decline of the strength thereof as well. Conversely, if this amount is less than 10 parts by weight, the produced absorbent material will manifest weak strength and inferior flexibility. The more desirable amount of water is in the range of 20 to 100 parts by weight, most ideally 30 to 80 parts by weight, based on 100 parts by weight of the absorbent resin particles.

As concrete examples of the water to be used in the present invention, distilled water, ion-exchange water, tap water, and industrial grade pure water may be cited. The water thus used is allowed to have an organic substance or an inorganic substance dissolved or dispersed therein.

Another preferred embodiment of this invention produces the planar agglomerate of absorbent resin particles by performing sequentially (a2) a step of spreading a granular absorbent resin in a planar form of a thickness controlled in the approximate range of 0.3 to 5 mm, preferably 0.5 to 3 mm, on a supporting material and (b2) a step of adding to the planar mass of absorbent resin particles formed at the step of (a2) and kept intact in the agglomerated form 3 to 30 parts by weight of water and 5 to 50 parts by weight of polyhydric alcohol, based on 100 parts by weight of the absorbent resin.

The step of (a2) is identical in procedure with the step of (a1) mentioned above.

The expression "(b2) a step of adding water and polyhydric alcohol to the absorbent resin particles spread in a controlled thickness as kept in the planar form" means that the addition of water and polyhydric alcohol to the absorbent resin particles is to be carried out in such a state that substantially no shear force may be exerted on the absorbent resin particles. It is accomplished, for example, by a method which comprises spraying the aqueous solution of polyhydric alcohol on the absorbent resin particles spread in a thickness controlled in the approximate range of 0.3 to 5 mm, a method which comprises spraying polyhydric alcohol on the spread absorbent region particles and then exposing them to saturated steam or retaining them in an atmosphere having a relative humidity of not less than 50%, or a method which spraying water on the spread absorbent resin particles and then spraying polyhydric alcohol thereon. Among other methods mentioned above, the method which comprises spraying an aqueous solution of polyhydric alcohol proves to be particularly desirable.

The amounts of the water and the polyhydric alcohol to be added to the absorbent resin particles at the step of (b2) are respectively 3 to 30 parts by weight and 5 to 50 parts by weight, based on 100 parts by weight of the absorbent resin. The absorbent material which retains the flexibility thereof intact even in an atmosphere of low humidity can be obtained when the water and the polyhydric alcohol are added in amounts which fall in the ranges mentioned above. The absorbent material of more desirable quality is obtained when the amount of the water is in the range of 5 to 20 parts by weight and that of the polyhydric alcohol in the range of 5 to 30 parts by weight. It is obtained more advantageously when the ratio of the amount of the polyhydric alcohol to that of the water by weight is not less than 1. If this ratio is less than 1, the produced absorbent material will have the possibility of entailing a decrease of the flexibility thereof in an atmosphere of low humidity.

As concrete examples of the polyhydric alcohol to be used in this invention, ethylene glycol, diethylene glycol, triethylene glycol, tetraethylene glycol, polyethylene glycol, propylene glycol, 1,3-propanediol, dipropylene glycol, 2,2,4-trimethyl-1,3-pentadiol, polypropylene glycol, glycerol, polyglycerol, 2-butene-1,4-diol, 1,4-butane diol, 1,5-pentane-diol, 1,6-hexanediol, 1,2-cyclohexane dimethanol, 1-2-cyclo-hexanol, trimethylolpropane, diethanolamine, triethanol amine, polyoxy propylene, oxyethylene-oxypropylene block copolymer, pentaerythritol, and sorbitol may be cited. Among other polyhydric alcohols mentioned above, glycerol, polyglycerol, ethylene glycol, diethylene glycol, triethylene glycol, and 1,3-propanediol prove to be preferable and glycerol, ethylene glycol, diethylene diglycol, and polyglycerol prove to be particularly preferable.

Yet another preferred embodiment of this invention produces the planar agglomerate of absorbent resin particles by performing sequentially (a3) a step of mixing 1 to 10 parts by weight of polyhydric alcohol with 100 parts by weight of the granular absorbent resin, (b3) a step of dry mixing the mixture obtained at the step of (a3) with hydrophilic fibers at a ratio in the range of 1 to 30 parts by weight of the hydrophilic fibers based on 100 parts by weight of the absorbent resin in the mixture, and (c3) a step of pneumatically molding the mixture obtained at the step of (b3) in the form of a sheet.

The polyhydric alcohol to be used at the step of (a3) is identical with the polyhydric alcohol mentioned above.

The amount of the polyhydric alcohol to be used at the step of (a3) is in the range of 1 to 10 parts by weight, desirably from 1 to 6 parts by weight, and more desirably from 1.5 to 5 parts by weight. It is necessary that the polyhydric alcohol be present in a prescribed amount in the surfacial region of the absorbent resin particles. The method for mixing the two components mentioned above is not particularly limited. This mixing can be implemented by the use of any of the heretofore well-known mixing devices and kneading devices such as, for example, the horizontal cylinder type mixer, the V-shaped mixer, the double wall cylinder type mixer, the ribbon type mixer, the conical type screw mixer, the high-speed fluidized type mixer, the rotary disk type mixer, the air current stirring type mixer, the gravitational fall mixer, and the stirring type mixer and various Kneaders. If the amount of the polyhydric alcohol is less than 1 part by weight, the mixture which is obtained at the step of (b3) by mixing the hydrophilic fibers with the mixture of the absorbent resin particles with the polyhydric alcohol will not only show unduly low uniformity but also betray inferior affinity of the hydrophilic fibers for the absorbent resin particles and suffer from serious exfoliation of absorbent resin particles from the mixture. Conversely, if the amount of the polyhydric alcohol exceeds 10 parts by weight, the mixture which is obtained at the step of (b3) by mixing the hydrophilic fibers with the mixture of the absorbent resin particles with the polyhydric alcohol will assume a strongly agglomerated texture such as to impair the ease with which this mixture is handled during the process of pneumatic molding.

The mixture which has been obtained at the step of (a3) is further dry mixed with 1 to 30 parts by weight of hydrophilic fibers at the step of (D3). As concrete examples of the hydrophilic fibers which are used in this invention, wood pulp fibers such as of mechanical pulp, chemical pulp, semi-chemical pulp, and dissolving pulp which are derived from wood and artificial cellulose fibers such as rayon and acetate may be cited. These hydrophilic fibers may partly incorporate therein such synthetic fibers as nylon, polyesters, and polyolefins. Among other hydrophilic fibers cited above, wood pulp fibers prove to be particularly desirable. The amount of the hydrophilic fibers to be mixed is in the range of 1 to 30 parts by weight, preferably 2 to 10 parts by weight, based on 100 parts by weight of the absorbent resin particles. If the amount of the hydrophilic fibers is less than 1 part by weight, the uniformity with which the hydrophilic fibers are mixed with the mixture of the absorbent resin particles with the polyhydric alcohol will be lowered and the exfoliation of absorbent resin particles from the mixture will be aggravated as well. Conversely, if the amount of the hydrophilic fibers exceeds 30 parts by weight, the absorbent resin content per unit volume of the absorbent material will be lowered possibly to the extent of exerting an adverse effect on the production of the absorbent material possessing ideal absorption characteristics (speed of absorption and capacity for absorption) aimed at by this invention. Further, the bulkiness of the hydrophilic fibers involved in this case will go to add to the thickness of the produced absorbent material.

The step of (b3) is carried out, for example, by causing an air current containing the hydrophilic fibers and an air current containing the mixture of the absorbent resin particles with the polyhydric alcohol to be supplied as metered onto a wire screen. In this case, the hydrophilic fibers and the mixture of the absorbent resin particles with the polyhydric alcohol are mixed with each other by the turbulence which is caused by the two air currents mentioned above. Alternatively, this step may be fulfilled by a method which comprises feeding the mixture of the absorbent resin particles with the polyhydric alcohol into an air current containing the hydrophilic fibers thereby mixing them or a method which comprises directly mixing by stirring the hydrophilic fibers with the mixture of the absorbent resin particles with the polyhydric alcohol.

The mixture which has been obtained at the step of (b3) is now pneumatically molded into the form of a sheet at the step of (c3). The pneumatic molding involved in this invention can be implemented by the use of a conventional device manufactured for use in the production of a web of hydrophilic fibers by the pneumatic molding. The sheet of the mixture mentioned above is formed by causing the mixture obtained at the step of (b3) to be carried on an air current and consequently enabling the carried mixture to be deposited fast on the wire screen.

The sheet resulting from the series of treatments at the component steps mentioned above may be compressed to a density in the range of 0.2 to 1.0 $g/cm^3$. The compression of the sheet enables the sheetlike matrix composed of the absorbent resin particles and the hydrophilic fibers to acquire improved stability of shape and consequently enables the produced absorbent material to display a further enhanced shape retaining property before and after absorbing an aqueous liquid. This compression is attained by passing the sheet between the opposed rolls so adjusted as to impart a desired density to the sheet. When embossed rolls furnished with varying patterns are used in this case, the sheet can be compressed and embossed at one time. Alternatively, a method which uses a press or a roller press may be adopted.

The density of the sheet of the mixture is in the range of 0.2 to 1.0 $g/cm^3$, preferably 0.3 to 0.8 $g/cm^3$. If the density is less than 0.2 $g/cm^3$, the produced absorbent material will possibly acquire unduly low mechanical strength such as to impair the ease of handling thereof and degrade the shape retaining property thereof before and after absorbing an aqueous liquid. Conversely, if the density exceeds 1.0 $kg/cm^3$, the absorbent material will entail not only loss of the flexibility thereof but also a decrease of the speed of absorption.

The sheet of the mixture is desired to have a thickness in the range of 0.3 to 10 mm, preferably 0.5 to 5 mm. If this thickness is less than 0.3 mm, then the produced absorbent material will acquire unduly low strength and consequently suffer from lack of ease of handling. Further, the amount of the absorbent resin per unit surface area will be unduly small and the speed of absorption will be insufficient. Conversely, if the thickness exceeds 10 mm, the absorbent material fit for providing a compact and thin absorbent article aimed at by this invention will not be advantageously obtained.

The technique for mixing an absorbent resin powder with hydrophilic fibers and molding the resultant mixture in the form of a sheet has been known to the art. Since the conventional technique is adapted to avoid mutual approximation of the individual absorbent resin particles to the fullest possible extent, however, the highest content of absorbent resin particles that is obtained at all in the sheet of the mixture is about 50%. If the thin absorbent material aimed at by this invention is produced from the sheet of the mixture having such a low content of absorbent resin particles, it will not infallibly acquire an ample capacity for absorption. The sheetlike absorbent material cannot be formed as described above by simply increasing the content of absorbent resin particles in the mixture. In the yet another preferred embodiment of this invention, the planar agglomerate of absorbent resin particles is obtained by adding to the sheet resulting from the series of treatments at the steps of (a3) to (c3) water and/or steam (water component) in an amount in the range of 10 to 150 parts by weight, based on 100 parts by weight of the absorbent resin in the sheet. Owing to the addition of the water component to the sheet, the produced absorbent material is enabled to manifest an improved shape retaining property before and after absorbing an aqueous liquid and enjoy an increase of the speed of absorption. A method which comprises spraying water onto the sheet, a method which comprises exposing the sheet to saturated steam, and a method which comprises retaining the sheet in an atmosphere having a relative humidity of not less than 50% may be cited as concrete means for implementing this addition of the water component. If the contact of the sheet with the water component is not uniform and, therefore, needs to be uniformized, the sheet can be obtained in a form homogeneous throughout the entire volume thereof by preventing the sheet subsequent to the contact thereof with the water component from the otherwise possible vaporization of the water component (as by tight sealing) and then allowing the sheet to stand (preferably at a temperature of not less than 30°C) for a while.

The amount of the water and/or steam to be added to the sheet is in the range of 10 to 150 parts by weight, desirably 10 to 100 parts by weight, and more desirably 20 to 80 parts by weight, based on 100 parts by weight of the absorbent resin in the sheet. If the amount of the water component exceeds 150 parts by weight, the absorbent resin content in the sheet will be unduly small and the produced absorbent material will suffer from a decrease in the capacity for absorption and entail loss of strength. Conversely, if this amount is less than 10 parts by weight, the effect of the addition of the water component will not be obtained.

Still another preferred embodiment of this invention produces the planar agglomerate of absorbent resin particles by performing sequentially (a4) a step of mixing 1 to 10 parts by weight of polyhydric alcohol with 100 parts by weight of a granular absorbent resin and (b4) a step of casting the mixture obtained at the step of (a4) in a planar form of a thickness controlled in the approximate range of 0.3 to 5 mm on a supporting material.

The polyhydric alcohol to be used at the step of (a4) is identical with the polyhydric alcohol mentioned above.

The amount of the polyhydric alcohol to be used at the step of (a4) is in the range of 1 to 10 parts by weight, preferably from 1 to 6 parts by weight, and more desirably from 1.5 to 5 parts by weight, based on 100 parts by weight of the absorbent resin particles. The method for mixing the two components mentioned above is not particularly limited. This mixing can be implemented by the use of any of the heretofore well-known mixing devices and kneading devices such as, for example, the horizontal cylinder type mixer, the V-shaped mixer, the double wall cylinder type mixer, the ribbon type mixer, the conical type screw mixer, the high-speed fluidized type mixer, the rotary disk type mixer, the air current stirring type mixer, the gravitational fall mixer, the stirring type mixer, and various kneaders. If the amount of the polyhydric alcohol is less than 1 part by weight, the produced absorbent material will manifest a degraded shape retaining property before and after absorbing an aqueous liquid. Conversely, if the amount of the polyhydric alcohol exceeds 10 parts by weight, the subsequent step of (b4) for casting the mixture in a planar form of a controlled thickness will be fulfilled only with difficulty and the produced absorbent material will suffer from a decrease in the capacity for absorption of an aqueous liquid.

The mixture which has been obtained at the step of (a4) is now cast in a planar form of a controlled thickness on a supporting material. When the aforementioned auxiliaries are used additionally in this case, the mixture obtained at the step of (a4) will possibly enjoy improved flowability and the operation of casing the mixture in the planar form will be consequently facilitated.

The thickness of the planar form of the mixture to be cast at the step of (b4) is in the approximate range of 0.3 to 5 mm. If this thickness is less than about 0.3 mm, the granular absorbent resin will not be easily spread in the planar form and the produced absorbent material will be liable to manifest unduly low strength and suffer from degradation of the ease of handling. Further, the amount of the absorbent resin per unit surface area will be unduly small and the produced absorbent material will entail a decrease in the speed of absorption. Conversely, if the thickness exceeds 5 mm, the produced absorbent material will rather suffer from a decrease in the speed of absorption than enjoy an increase therein.

In the still another preferred embodiment, the planar agglomerate of absorbent resin particles is obtained by adding to the planar sheet resulting from the series of treatments at the steps of (a4) and (b4) water and/or steam (water component) in the amount in the range of 10 to 150 parts by weight, based on 100 parts by weight of the absorbent resin in the planar sheet. Owing to the addition of the water component to the planar sheet, the produced absorbent material is enabled to manifest an improved shape retaining property before and after absorbing an aqueous liquid and enjoy an increase in the speed of absorption as well. Further, the absorbent material acquires ample flexibility. A method which comprises spraying water on the planar sheet, a method which comprises exposing the planar sheet to saturated steam, and a method which comprises retaining the planar sheet to an atmosphere having a relative humidity of not less than 50% may be cited as concrete means for fulfilling the addition of the water component. If the contact of the planar sheet with the water component is not ununiform and, as a result, needs to be uniformized, the planar sheet can be obtained in a form homogeneous throughout the entire volume thereof by preventing the sheet subsequent to the contact thereof with the water component from the otherwise possible vaporization of the water component (as by tight sealing) and then allowing the sheet to stand (preferably at a temperature of not less than 30°C) per se for a while.

The amount of the water and/or the steam (water component) to be added to the planar sheet resulting from the series of treatments at the steps of (a4) and (b4) is in the range of 10 to 150 parts by weight, preferably 10 to 100 parts by weight, and more preferably 20 to 80 parts by weight, based on 100 parts by weight of the absorbent resin in the planar sheet. If the amount of the water component exceeds 150 parts by weight, the absorbent resin content in the planar sheet will be unduly small and the produced absorbent material will suffer from a decrease in the capacity for absorption and entail loss of strength. Conversely, if this amount is less than 10 parts by weight, the effect of the addition of the water component will not be obtained.

In the still another preferred embodiment of this invention, the planar agglomerate of absorbent resin particles is obtained by molding a granular hydrogel-like polymer which is produced by polymerization and vested with the ability to absorb an aqueous liquid. The term "hydrogel-like polymer" as used in the present invention refers to a polymer which occurs when a hydrophilic polymer has absorbed an aqueous liquid and consequently swelled with the absorbed liquid. Generally, the hydrogel-like polymer assumes a gel-like constitution when the water content thereof is about 30% by weight or more, based on the total weight of the polymer. For the sake of implementing the method of production according to this invention, the water content of the hydrogel-like polymer is in the range of 30 to 90% by weight, preferably from 40 to 80% by weight. If this water content is less than 30% by weight, the produced absorbent material will possibly suffer from a decrease in the strength. Conversely, if the water content exceeds 90% by weight, the ease of handling of the hydrogel-like polymer will be likely to be degraded and the hydrogel-like polymer in a granular form will tend to undergo integration into a one-piece mass and, as a result, the produced absorbent material will possibly encounter degradation of the absorption characteristics (speed of absorption and capacity for absorption).

The hydrogel-like polymer in this invention is further capable of absorbing an aqueous liquid and is granular in form. The expression "capable of absorbing an aqueous liquid" refers to the possession by the hydrogel-like polymer of the nature of absorbing water on exposure to the water and consequently inducing the phenomenon of voluminal expansion. Preferably, the hydrogel-like polymer possesses the ability to absorb at least three times its weight of water.

The term "granular" refers to the shape of each of the individual discrete units. The unit may be an agglomerate. Typical examples of the shape include a rectangular solid, a rod, a polyhedron, a sphere, a round body, an angular body, an irregular body, an irregular body of random size, a needle, a flake, and a fiber. Preferably, the granular particles are irregularly shaped particles of random sizes or spheres of a uniform size.

While the hydrogel-like polymer in this invention is allowed to possess a size distribution over a wide range, it is preferable to possess a specific size distribution and a specific size. In the preferred embodiment of this invention, the hydrogel-like polymer possesses an average particle diameter in the range of 50 to 2000μm on dry basis. The hydrogel-like polymer contains substantially no particle having a diameter exceeding 5 mm, preferably 3 mm. The method for determining the average particle diameter of polymer particles on dry basis will be specifically described hereinbelow in connection with the method of testing dealt with in one working example cited herein. If the average particle diameter on dry basis exceeds 200μm, the hydrogel-like polymer will generally incur a decrease in the surface area and the produced absorbent material will tend to suffer from a decrease in the speed of absorption. Conversely, if the average particle diameter on dry basis is less than 50μm, the ease of handling of the hydrogel-like polymer will tend to be degraded. The average particle diameter on dry basis is preferably in the range of 50 to 1500μm, more preferably in the range of 50 to 1000μm, and most preferably in the range of 50 to 600μm.

The hydrogel-like polymer in this invention has been produced by polymerization. To be specific, the hydrogel-like polymer obtained at the step of polymerization is not subjected to the step of intentionally drying the polymer, the step of pulverizing the dried polymer, etc. but put to use as it is instead in the method of production of the present invention. It has been heretofore customary to produce an absorbent resin for an absorbent material generally by polymerizing an aqueous solution of a monomer component containing an ethylenically unsaturated monomer enabled by polymerization to assume the constitution of a hydrogel thereby obtaining a hydrogel-like polymer, drying the hydrogel-like polymer, and pulverizing the dry hydrogel-like polymer into a powder. The method of this invention for the production of an absorbent material allows the hydrogel-like polymer obtained at the step of polymerization to be used directly as the raw material for an absorbent material without causing the hydrogel-like polymer to undergo the step of drying or the step of pulverizing a dry polymer which has been heretofore regarded as an indispensable process.

The monomer component which is enabled by polymerization to assume the constitution of a hydrogel is generally a water-soluble ethylenically unsaturated polymer. As typical examples of the water-soluble ethylenically unsaturated polymer, anionic monomers such as (meth)acrylic acids, maleic acid (anhydride), fumaric acid, crotonic acid, itaconic acid, 2-(meth)acryloyl ethanesulfonic acids, 2-(meth)acryloyl propanesulfonic acids, 2-(meth)acrylamide-2-methyl propanesulfonic acids, vinyl sulfonic acids, and styrene sulfonic acids and salts thereof; nonionic hydrophilic group-containing monomers such as (meth)acryl amides, N-substituted (meth)acryl amides, 2-hydroxyethyl (meth)acrylates, 2-hydroxypropyl (meth)acrylates, methoxypolyethylene glycol (meth)acrylates, and polyethylene glycol (meth)acrylates; and amino group-containing unsaturated monomers such as N,N-dimethyl aminoethyl (meth)acrylates, N,N-dimethyl aminopropyl (meth)-acrylates, and N,N-dimethyl aminopropyl (meth)acrylamides and the products of quaternization thereof may be cited. Hydrophobic monomers such as acrylic esters like methyl (meth)acrylates, ethyl (meth)acrylates, and butyl (meth)acrylates and vinyl acetate and vinyl propionate may be used in an amount not so large as to impair notably the hydrophilicity of the produced polymer. One member or a combination of two or more members selected from the group of monomers mentioned above can be used. In consideration of the absorption characteristics of the absorbent material to be finally obtained, it is preferable to use at least one member selected from the group consisting of (meth)acrylic acids (salts), 2-(meth)acryloyl ethanesulfonic acids (salts), 2-(meth)acrylamide-2-methyl propanesulfonic acids (salts), (meth)acrylamides, methoxypolyethylene glycol (meth)-acrylates, and N,N-dimethylaminoethyl (meth)acrylates, and the products of quaternization thereof and it is particularly desirable to include a (meth)acrylic acid (salt) as an essential component. Most desirably, the (meth)acrylic acid has 30 to 90 mol% thereof neutralized with a basic substance.

In the polymerization of the monomer component, the method for initiating this polymerization is not particularly limited. The initiation may be effected by a method which comprises using a polymerization initiator or a method which comprises using an activated energy ray such as rado active ray, an electron beam, an ultraviolet light, or an electromagnetic ray. Generally, a free radical polymerization initiator is used for the initiation. As typical examples of the free radical polymerization initiator, inorganic peroxides such as ammonium persulfate, potassium persulfate, and hydrogen peroxide; organic peroxides such as t-butyl hydroperoxide, benzoyl peroxide, and cumene hydroperoxide; azo compounds such as 2,2'-azo-bis(N,N'-dimethylene isobutyl amidine) and salts thereof, 2,2'-azo-bis(2-amidinopropane) and salts thereof, and 4,4'-azo-bis-4-cyanovaleric acid; and redox type initiators combining such reducing agents as sulfites, hydrogen sulfites, and ascorbic acid with peroxides may be cited. The amount of the polymerization initiator to be used is generally in the range of 0.001 to 5% by weight, preferably from 0.01 to 1% by weight, based on the amount of the monomer component.

Optionally, the polymerization of the monomer component may be carried out in the presence of a hydrophilic polymeric compound such as starch, cellulose, chitin, polyvinyl alcohol, or polyethylene glycol so as to effect the polymerization in conjunction with the formation of a graft bond or a complex.

The hydrogel-like polymer in this invention may be a self-crosslinking polymer which is obtained without using a cross-linking agent or a polymer which is obtained by using a cross-linking agent containing an ethylenically unsaturated group and/or a reactive functional group in an amount necessary for enabling the absorption characteristics of the produced absorbent material to reach desired levels. The crosslinking agent has no particular restriction except for the requirement that it be capable of polymerizing the aforementioned ethylenically unsaturated monomer and consequently producing a hydrogel-type polymer. As typical examples of the cross-linking agent, N,N'-methylene bis(meth)acrylamides, (poly)ethylene glycol di(meth)acrylates, glycerol tri(meth)acrylates, trimethylol propane tri(meth)acrylates, triallyl amine, triallyl cyanurate, triallyl isocyanurate, glycidyl methacrylate, (poly)ethylene glycol, diethylene glycol, (poly)glycerol, propylene glycol, diethanol amine, trimethylol propane, pentaerythritol, (poly)ethylene glycol diglycidyl ether, (poly)glycerol polyglycidyl ether, epichlorohydrin, ethylenediamine, polyethyleneimine, (poly)aluminum chloride, aluminum sulfate, potassium chloride, and magnesium sulfate may be cited. One member or a combination of two or more members selected from the group of cross-linking agents cited above in due consideration of reactivity can be used. Among other cross-linking agents mentioned above, N,N'-methylenebis(meth)acrylamides, (poly) ethylene glycol (meth)acrylates, and trimethylol propane tri(meth)acrylates prove to be particularly preferable. The amount of the crosslinking agent to be used is generally in the range of 0.001 to 2 mol%, preferably from 0.01 to 1 mol%, based on the amount of the monomer component.

The method of polymerization to be used for the production of the hydrogel-like polymer of this invention is not particularly limited. Any of the heretofore well-known methods can be used. The method of aqueous solution polymerization or the method of reversed-phase suspension polymerization can be generally adopted for the polymerization under consideration. As typical examples of the method of aqueous solution polymerization, a method which comprises placing the aqueous solution of a given monomer component in a molding frame and causing the aqueous solution to polymerize therein (JP-A-55-133,413) and a method which comprises polymerizing the aqueous solution of a monomer component by the use of a polymerization vessel such as, for example, a kneader provided with a stirring shaft capable of finely dividing a hydrogel-like polymer to be eventually formed therein (JP-A-57-34,101, for example) may be cited. The latter method of polymerization is more preferable in respect that it allows a granular hydrogel-type polymer to be obtained at the step of polymerization. A method which comprises suspending the aqueous solution of a monomer component in a hydrophobic organic solvent and causing the resultant suspension to polymerize in the presence of a dispersant (JP-B-54-30,710, JP-A-56-147,806, and JP-A-59-140,202) may be cited as one typical example of the reversed-phase suspension polymerization. The reversed-phase suspension polymerization method generally produces spherical hydrogel-like polymer particles. Thus, it can produce a granular hydrogel-like polymer to be used in the method of production according to this invention.

By the aqueous solution polymerization method, the hydrogel-like polymer may possibly be obtained in the form of a bulk. For the hydrogel-like polymer to suit the method of production of this invention, therefore, it possibly necessitates a step of molding the bulk of polymer in a granular form. The method to be used for molding the hydrogel-like polymer as produced by polymerization in a desired granular form may be any of the methods heretofore well known in the art. For example, the hydrogel-like polymer may be pulverized into particles by virtue of a shearing force. Screw type extruding devices like a meat chopper, a (mechanical) pressure kneader, an internal mixer, a Banbury mixer, and other similar kneaders may be cited as concrete examples of the device which is used for exerting the shearing force on the hydrogel-like polymer.

The hydrogel-like polymer to be used in this invention may incorporate therein such auxiliaries as water-insoluble minute particles, a surfactant, and short fibers in an amount not so large as to obstruct the subsequent steps of molding and agglomeration. These auxiliaries possibly serve the purpose of enabling the produced absorbent material to acquire a heightened speed of absorption or the purpose of facilitating the work of molding the hydrogel-like polymer. As typical examples of the surfactant, polyoxyethylene alkyl ethers, polyoxyethylene alkylphenol ethers, sorbitan fatty esters, polyoxyethylene sorbitan fatty esters, polyoxyethylene acyl esters, oxyethylene oxypropylene block copolymers, and sucrose fatty esters may be cited. As typical examples of the water-insoluble inorganic minute particles, mica, pyrophyllite, kaolinite, hulsite, and other similar clayish minerals, and minute silica grains such as Aerosil 200 (produced by Japan Aerosil Ltd.) consisting mainly of silicon dioxide particles having an average particle diameter of not more than 50μm and Carplex#80 (produced by Shionogi & Co., Ltd.) may be cited. As typical examples of the water-insoluble organic minute particles, carbon black, activated carbon, and pulp powder may be cited. Among other auxiliaries mentioned above, minute silica grains prove to be particularly preferable because they are highly effective in heightening the speed of absorption. The amount of the auxiliary of this nature to be used is in the range of 0.1 to 10 parts by weight, more desirably from 0.5 to 5 parts by weight, and most preferably 0.5 to 2 parts by weight, based on 100 parts by weight of the absorbent resin. If this amount exceeds 10 parts by weight, the excess will not bring about a proportional addition to the effect. On the contrary, this excess will induce a decrease in the capacity for absorption and will possibly render the formation of an agglomerate difficult. If the amount is less than 0.1 part by weight, the effect of the use of the auxiliary will not be obtained.

The method of production involved in the present invention comprises forming by polymerization a granular hydrogel-like polymer capable of absorbing an aqueous liquid, molding this granular hydrogel-like polymer, and irradiating the resultant agglomerate with an activated energy ray. The method for molding the hydrogel-like polymer is not particularly limited. Such ordinary methods as embossing, extrusion, and rolling may be cited as typical examples of the method. Alternatively, the molding may be fulfilled by a method which comprises packing the hydrogel-like polymer in a container, a molding frame, or a bag of desired shape. Generally, the fresh hydrogel-like polymer obtained by polymerization still retains the heat of polymerization which falls in the approximate range of 40° to 90°C. When it is piled and then left cooling, therefore, it spontaneously forms an agglomerate.

The shape in which the hydrogel-like polymer is molded has no particular limit. A sheet, a tape, a mat, a bar, a cord, a plate, a pillar, a sphere, an indefinitely shaped solid, etc. may be suitable selected to suit the purpose of use. Dimensional factors such as expansion, length, and width have no particular limit.

The method of production involved in the present invention comprises irradiating the agglomerate of hydrogel-like polymer obtained by the molding treatment mentioned above with an activated energy ray. Owing to the irradiation of the activated energy ray, the produced absorbent material excels not only in absorption characteristics and flexibility but also in the shape retaining property after absorbing an aqueous liquid. Specifically, the absorbent material acquires from the irradiation of the activated energy ray the nature that when it absorbs an aqueous liquid and swells with the absorbed liquid, it inflates to a shape which is approximately similar to the shape thereof prior to the absorption of the liquid. As a result, the absorbent material is enabled to keep the absorbent resin, a component thereof, fast in place even after absorbing the liquid. Further, the produced absorbent material contains only in small amounts an unaltered monomer and a water-soluble substance whose presence is abhorred generally by any absorbent material.

A further preferred embodiment of this invention produces the planar agglomerate of absorbent resin particles by performing sequentially (a5) a step of molding a granular polymer of the form of hydrogel obtained by polymerization and possessed of an ability to absorb an aqueous liquid in a planar form of a thickness controlled in the approximate range of 0.3 to 20 mm on a supporting material and (b5) a step of decreasing the water content of the hydrogel-like polymer obtained at the step of (a5) and kept intact in the form of a hydrogel by at least 10% by weight thereby giving rise to an agglomerate of hydrogel-like polymer having a water content in the range of 20 to 70% by weight. The method for molding the hydrogel-like polymer in the planar form is not particularly limited. A method which comprises spraying the hydrogel-like polymer on a supporting material kept in motion in a fixed direction and a method which comprises placing the hydrogel-like polymer in a molding frame and spreading it uniformly therein may be cited as typical examples of the method to be used for the molding.

The term "planar" as used in this invention refers to the state to be assumed by the granular hydrogel-like polymer after the originally numerous discrete particles thereof have been physically adjoined to one another and consequently allowed to form a planar agglomerate. To be specific, the hydrogel-like polymer particles have assumed the state of forming a continuous agglomerate by being directly adjoined to one another instead of assuming the state of forming an agglomerate through the medium of a third substance such as, for example, an adhesive agent or a fibrous substrate. The presence of an at least partly continuous surface justifies the use of the term "planar." The surface may contain one or more through holes of a desired shape, for example. The planar agglomerate may be waved or puckered. It may be shaped like a ribbon, a cord, a strip, etc. It is preferable to have on one (obverse or reverse) side thereof an area of not less than 5 cm$^2$, preferably not less than 10 cm$^2$, and more preferably not less than 15 cm$^2$.

In this invention, the hydrogel-like polymer is molded in a planar form of a thickness controlled in the approximate range of 0.3 to 20 mm. If this thickness of the planar form is less than about 0.3 mm, the produced absorbent material will manifest unduly low strength and suffer from degradation of the ease of handling. Conversely, if the thickness exceeds 20 mm, the produced absorbent material will acquire an unduly large thickness and consequently prove to be undesirable for the purpose of allowing production of a compact and thin absorbent article aimed at by the present invention. The controlled thickness of the planar agglomerate of the absorbent resin particles is desired to be in the approximate range of 0.5 to 10 mm, preferably 0.5 to 5 mm.

The expression "decreasing the water content of the hydrogel-like polymer obtained at the step of (a5) and as retained intact in the planar form while involving (b5) the step of decreasing the water content of the hydrogel-like polymer obtained at the step of (a5) and kept intact in the planar form by at least 10% of the total weight of the polymer thereby giving rise to an agglomerate of hydrogel-like polymer having a water content in the range of 20 to 70% by weight" means the action of decreasing the water content of the hydrogel-like polymer without substantially exposing the hydrogel-like polymer to an external force such as a shearing force. A method which comprises placing the hydrogel-like polymer on a supporting member exhibiting only a low adhesive property to the polymer and thermally drying the hydrogel-like polymer on the supporting member with the aid of hot air, steam, or heat, a method which comprises placing the hydrogel-like polymer on the same supporting member as mentioned above and immersing the polymer in a hydrophilic organic solvent thereby effecting dehydration thereof, and a method which comprises placing the hydrogel-like polymer on the same supporting member and exposing the polymer to a high-frequency electric field thereby drying the polymer by induction heating may be cited as concrete examples of the method for fulfilling the decrease of the water content. If the supporting member used in this case exhibits a high adhesive property to the hydrogel-like polymer, the hydrogel-like polymer in the planar form, when shrunken in consequence of a decrease in the water content thereof, will develop strain which possibly degrades the cohesive force between the adjacent particles of the hydrogel-like polymer and lowers the strength of the produced absorbent material. A supporting member having the surface thereof coating with a non-viscous substance such as fluorine resin may be cited as one concrete example of the supporting member exhibiting only a low adhesive property to the hydrogel-like polymer.

At the step of (b5), the hydrogel-like polymer is caused to have the water content thereof decreased by at least 10% by weight, based on the total weight of the polymer to give rise to an agglomerate of the hydrogel-like polymer having a water content in the range of 20 to 70% by weight. If the decrease of the water content is less than 10% by weight, the cohesive force between the adjacent hydrogel-like polymer particles will be insufficient and the strength of the produced absorbent material will be unduly low. The decrease of the water content is in the range of 15 to 70% by weight, preferably 20 to 60% by weight.

The agglomerate of the hydrogel-like polymer which is obtained by decreasing the water content has a water content in the range of 20 to 70% by weight. If this water content is less than 20% by weight, the produced absorbent material will be deficient not only in the flexibility but also in the speed of absorption. Conversely, if this water content exceeds 70% by weight, the produced absorbent material will be deficient in the strength. The water content is preferable to be in the range of 25 to 60% by weight, more preferably 30 to 50% by weight.

From the standpoint of the flexibility of the produced absorbent material, the water content of this material is preferable to be uniform throughout the entire volume of the material. For the purpose of imparting homogeneity to the produced absorbent, it is necessary that the water content of the hydrogel-like polymer in the planar form be decreased uniformly. The ease with which the water content is uniformly decreased tends to decrease in proportion as the thickness of the hydrogel-like polymer increases. Also from this point of view, the thickness of the hydrogel-like polymer at the step of (a5) is preferable to be not more than 20 mm. Among other methods for uniform decrease of the water content cited above, the method which comprises exposing the hydrogel-like polymer to a high-frequency electric field thereby drying the polymer by induction heating proves to be particularly preferable. Even the method which utilizes hot air for thermally drying the polymer is capable of uniformly decreasing the water content by the use of a hot air which has a high dew point and a relatively low temperature. In this case, the hydrogel-like polymer is desired to be directly exposed to a gas containing at least steam and having a dew point in the range of 50° to 100°C at a temperature in the range of 80° to 150°C.

This invention also concerns a method for the production of an absorbent material characterized by irradiating a planar agglomerate of absorbent resin particles with an activated energy ray. Owing to the irradiation of the activated energy ray, the produced absorbent material is enabled not only to excel in flexibility but also to manifest an exalted shape retaining property after absorbing an aqueous liquid. To be specific, the absorbent material acquires from the irradiation of the activated energy ray the nature that when it absorbs an aqueous liquid and swells with the absorbed liquid, it inflates to a shape approximately similar to the shape thereof prior to the absorption of the liquid. As a result, the absorbent material is enabled to keep the absorbent resin, a component thereof, fast in place even after absorbing the liquid.

The absorbent material which is obtained by the method of production according to this invention possesses ideal absorption characteristics (speed of absorption and capacity for absorption) and enables the absorbent resin to be kept fast at a desired place before and after absorbing an aqueous liquid such as water or bodily humor. The speed of absorption which is determined by the method to be specifically described hereinbelow is defined as the time which is required by a sample absorbent material of a prescribed surface area to absorb completely a prescribed amount of artificial urine. It has been ascertained that for the purpose of decreasing the amount of wood pulp fluff to be used and ensuring the production of a compact and thin absorbent material, it is necessary that the speed of absorption be increased.

The absorbent material which is obtained by the method of production according to this invention acquires flexibility attended by suppleness when it contains the water component or a polyhydric alcohol. The method for determining the flexibility will be described specifically hereinbelow. The suppleness of the absorbent material and the index representing the difficulty with which the absorbent material is caused by an external force to shed minute particles constitute criteria for the flexibility contemplated by the present invention. If the absorbent material is deficient in flexibility, it will be stiffened and rigidified, deprived of usefulness, even disintegrated, and possibly caused to shed absorbent resin particles.

An absorbent article which is a laminated absorbent material is produced by superposing a water-pervious sheet on at least one of the opposite sides of the absorbent material to be obtained by the method of production according to this invention. In the laminated absorbent material of this kind is only required to have the water-pervious sheet superposed on at least one of the opposite sides thereof. Optionally, it may have such water-pervious sheets superposed each on the opposite sides thereof. It is permissible to have a water-pervious sheet superposed on one of the opposite sides of the absorbent material and a water-impervious sheet on the other side thereof. The laminated absorbent material of this kind is obtained by simply superposing the water-pervious sheet or the water-impervious sheet on the aforementioned absorbent material. It may be given an embossing treatment when necessary. Alternatively, the laminated absorbent material of this kind can be obtained by having the absorbent material formed on either the water-pervious sheet or the water-impervious sheet. In this case, the laminated absorbent material is produced by keeping the superposed sheets in a suspended state and joining the matched edges thereof with adhesive agent or by such a well-known technique of union as heat sealing or ultrasonic fusion.

Regenerated cellulosic non-woven fabrics, fluffy pulp, viscose rayon, cotton card web, and paper may be cited as typical examples of the water-pervious sheet. The water-pervious sheet is preferable to have a structure highly pervious to water. Films of nylon, polyethylene, polypropylene, polyesters, polystyrene, and polyvinyl chloride may be cited as concrete examples of the water-impervious sheet.

The absorbent material which is obtained by the method of production according to this invention can be vested with a new function when it is combined with a water-soluble polymeric compound, a deodorant, a perfume, a chemical agent, a plant growth accelerator, a fungicide, a mildewcide, a foaming agent, a pigment, a carbon black, activated carbon, or short fibers.

The absorbent material obtained by the method of production according to this invention can be combined with cellulose fibers or a web thereof or with synthetic fibers or a web thereof to produce an absorbent article which is suitable as an absorbent layer as in a sanitary material, for example. Such well-known means to obtain an absorbent article as a method which comprises nipping the absorbent material between papers, non-woven fabrics, or mats made of cellulose fibers or synthetic fibers and a method which comprises chopping cellulose fibers and the absorbent material into ribbons and blending the ribbons may be suitably selected and used. The absorbent article which is obtained as described above exhibits absorption characteristics equal to or better than those of the conventional absorbent article, though it is thin and compact as compared with the conventional absorbent article.

The absorbent material and the absorbent article which are obtained by the methods of production according to this invention possess ideal absorption characteristics (speed of absorption and capacity for absorption) and enable the absorbent resin to be kept fast at a desired place before and after absorbing an aqueous liquid such as water or bodily humor. Unlike the conventional absorbent article which requires the absorbent resin particles to be incorporated at a relatively low concentration in a fibrous matrix for the purpose of precluding the otherwise possible blocking, therefore, that of the present invention can incorporate the absorbent resin particles at a relatively high concentration. By using the absorbent material which is obtained by the method of production according to this invention, an absorbent article containing a (substantially dry) absorbent resin at a concentration in the approximate range of 50 to 98% by weight can be produced. The absorbent resin content of the absorbent article is in the approximate range of 60 to 95% by weight, preferably 70 to 95% by weight. Even when the absorbent article is manufactured with such a high resin concentration as described above, the absorbent material of this invention has no possibility of suffering the absorbent resin contained in the absorbent article to migrate within or spill from the absorbent article at the step of manufacture of the absorbent article, the step of packaging thereof, and the step of transfer thereof or suffering the absorbent resin to move within the absorbent article after absorbing the aqueous liquid. Neither has it the possibility of shedding dust.

The absorbent article according to this invention is produced by containing the absorbent material obtained by the method of production according to this invention in a bag having at least one side wall thereof formed of a water-pervious sheet. This absorbent article is suitable for use in such sanitary materials as pads to be worn by patients of incontinence, disposable diapers, sanitary napkins, and tampons, dew preventing sheets, agricultural water retaining materials, waterproofing agents for civil engineering works, medical sheets, materials for keeping foodstuffs fresh, and materials for preventing foodstuffs from dripping which are consumer products currently available in the market. Virtually all these consumer products comprise a water-pervious sheet forming an obverse side thereof, a water-impervious leakproof sheet forming a reverse side thereof, and an absorbent layer occupying an intermediate position. The use of the absorbent article which contains therein the absorbent material obtained by the method of production according to this invention permits manufacture of consumer products exhibiting absorption characteristics equal to or better than those of the conventional countertypes, though they are notably thin and compact as compared with the conventional consumer products.

The absorbent article of this invention is suitable for absorbing numerous kinds of fluids such as bodily humors like urine and menstruation, liquids oozing from meat and fish, and juices exuding from fruits and vegetables and can be applied to such products as pads for patients of incontinence and pet pads, such sanitary products as sanitary napkins and tampons, and such household products as towels, bandages, materials for preserving foodstuffs, and absorbent materials for drips from foodstuffs.

Now, this invention will be described more specifically below with reference to working examples. It should be noted that the present invention is not limited to these examples.

Referential Example 1 - Synthesis of absorbent resin particles (A)

In a jacketed kneader of stainless steel having an inner volume of 10 liters and provided with two sigma-shaped vanes, 5,500 g of the aqueous solution of a monomer comprising 75 mol% of sodium acrylate and 25 mol% of acrylic acid (monomer concentration 38%) and 3.1 g of trimethylolpropane triacrylate (0.045 mol% based on the amount of the monomer) as a cross-linking agent were placed and nitrogen gas was blown in to displace the air entrapped in the reaction system. The kneader was heated by passing hot water at 30°C through the jacket, the sigma-shaped vanes were rotated at 40 rpm to stir the contents of the kneader, and 2.8 g of sodium persulfate and 0.1 g of L-ascorbic acid were added as polymerization initiators to the contents of the kneader to initiate polymerization of the monomer. The polymerization was continued for 30 minutes. After the reaction, a hydrogel-like polymer consequently produced in a finely divided form was spread on a metallic net having a mesh size of 0.3 mm and left drying thereon at 150°C for 90 minutes. A dry product (ppA) consequently obtained was pulverized with a hammer mill to produce absorbent resin particles (pA) passing a 850-μm screen. A mixture obtained by mixing 100 parts by weight of the absorbent resin particles (pA) and 0.5 part by weight of glycerol, and an aqueous mixture consisting of 1 part by weight of water and 2 parts by weight of isopropanol was placed in a bowl immersed in an oil bath (195°C). The mixture in the bowl was heat-treated as stirred for 45 minutes to obtain absorbent resin particles (A) passing a 850μm screen. The absorbent resin particles (A) were found to contain particles passing a 150μm screen at a proportion of 13% by weight. The absorption ratio of the absorbent resin particles (A) under a load was found to be 25 ml/g.

[1] Absorption capacity of absorbent resin particles under load

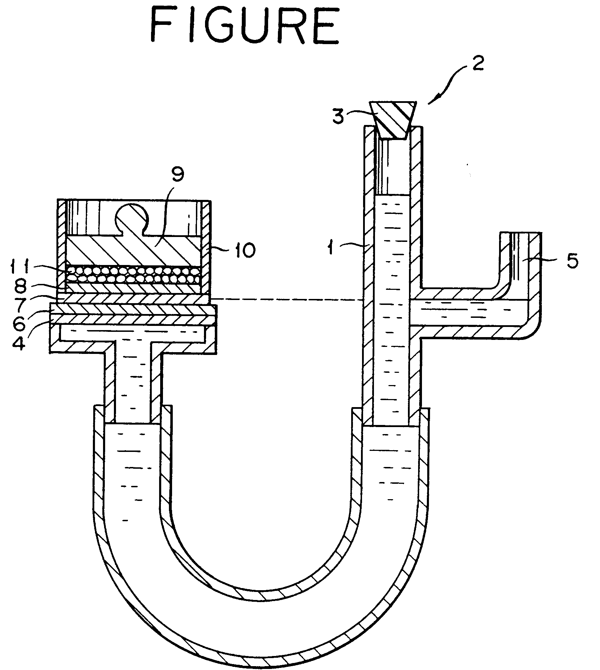

The absorption capacity under a load was determined by the use of a device illustrated in Fig. 1. An upper mouth 2 of a buret 1 was closed with a stopper 3 and a measuring stand 4 and an air vent 5 were set in place flush with each other. A filter paper 7 was placed on a glass filter 6 having a diameter of 70 mm and located in the central part of the measuring table 4. A non-woven fabric 8 was fixed at the lower end part of a supporting cylinder 10 having a diameter of 55 mm, absorbent resin particles 11 weighing 0.2 g were uniformly scattered on the non-woven fabric 8, and a load 9 of 20 g/cm$^2$ was placed on the layer of the absorbent resin particles 11. The supporting cylinder 10 holding the non-woven fabric 8, the absorbent resin particles 11, and the load 9 therein was set in place on the filter paper 7 overlying the glass filter 6. The amount (A ml) of an aqueous 0.9 wt% saline solution absorbed by the absorbent resin particles 11 during a period of 30 minutes was read out from the scale and used for determining the absorption capacity under a load in accordance with the following formula 1.

Absorption capacity under load (ml/g) = A (ml)/0.2 (g)   (1)

Example 1

One hundred (100) parts by weight of absorbent resin particles (A) and 1 part by weight of finely divided water-insoluble silica (produced by Japan Aerosil Ltd. and marketed under trademark designation of "Aerosil 200") were uniformly mixed. In a molding frame 150 mm × 300 mm, 39 g of the resultant mixture was uniformly spread and 19 g of water was imparted to the absorbent resin particles (A) by spraying by the use of a spray. The molding frame was wholly sealed tightly in a bag made of polyethylene and left standing at 45°C for 16 hours to obtain a flexible sheetlike absorbent material (a) 2 mm in thickness. By the use of a gamma ray irradiating device, the absorbent material (a) thus obtained was irradiated with a dosage of 25 kGy. The treated absorbent material (1) was evaluated by the following methods. This absorbent material (1) showed high flexibility (not less than 180 degrees of flexibility), entailed no exfoliation of absorbent resin particles, and could be handled as a one-piece sheet. When the square of 100 mm of this absorbent material (1) was placed in a petri dish 150 mm in diameter and 100 ml of an aqueous 0.9 wt% saline solution was poured in the petri dish, the absorbent material absorbed the saline solution satisfactorily and gelled. It showed ideal shape retaining property after absorbing the saline solution.

[2] Flexibility

A sample absorbent material having a width of at least 2 cm was placed on a horizontal surface and about one half of this absorbent material was slowly rotated in the horizontal plane round a center which was fixed on a straight line dividing the surface area of the absorbent material into two roughly equal parts. The rotation was continued until the absorbent material sustained a substantial crack. The angle of the rotation from the horizontal plane which was formed between the time the rotation was started and the time the crack was inserted was reported as the flexibility of the sample absorbent material. The increasing angle of this rotation is a criterion of the increasing degree of flexibility. During the procedure mentioned above, the absorbent material was kept under observation to determine the degree of exfoliation of absorbent resin particles from the absorbent material.

[3] Shape retaining property after absorbing liquid

The square of 100 mm of a sample absorbent material was placed in a petri dish 150 mm in diameter and 100 ml of an aqueous 0.9 wt% saline solution was poured into the petri dish. After the absorbent material had absorbed the saline solution and swelled with the absorbed saline solution, it was visually examined as to the shape. The shape retaining property of a given absorbent material is rated as satisfactory when the shape of the absorbent material after the absorption of liquid is practically similar to the shape thereof before the absorption of liquid. The absorbent material which had absorbed the saline solution was pinched at one end and pulled up. When the absorbent material was wholly raised as a result, the shape retaining property thereof after the absorption of saline solution was rated as ideal.

Control 1

A mixture comprising 100 parts by weight of absorbent resin particles (A) and 1 part by weight of Aerosil 100 was obtained by repeating the procedure of Example 1. Absorbent resin particles (Control A) having a water content of 16% were obtained by stirring the mixture and imparting water thereto by spraying by the use of a spray. In a molding frame enclosing an area of 150 mm X 300 mm, 39 g of the absorbent resin particles (Control A) were uniformly spread and molded in a thickness of about 2 mm. By the use of a gamma ray irradiating device, the resultant mold was treated with a dosage of 25 kGy. The treatment produced discrete absorbent resin particles which could not be handled as a one-piece sheet.

Example 2

One hundred (100) parts by weight of absorbent resin particles (A) and 0.5 part by weight of finely divided water-insoluble silica (produced by Degussa K.K. and marketed under trademark designation of "SIPERNAT22S") were uniformly mixed. In a molding frame enclosing an area of 150 mm × 300 mm, 27 g of the resultant mixture was uniformly spread and 8.1 g of an aqueous 50 wt% diethylene glycol solution was sprayed on the spread layer of the mixture to obtain a flexible sheet-like absorbent material (b) about 1.2 mm in thickness. By the use of a gamma ray irradiating device, the produced absorbent material (b) was treated with a dosage of 45 kGy. The absorbent material (2) thus obtained was rated by the same methods as used in Example 1. This absorbent material (2) showed high flexibility (not less than 180 degrees of flexibility), entailed no exfoliation of absorbent resin particles, and could be handled as a one-piece sheet. When the square of 100 mm of this absorbent material (2) was placed in a petri dish 150 mm in diameter and 100 ml of an aqueous 0.9 wt% saline solution was poured in the petri dish, the absorbent material absorbed the saline solution satisfactorily and gelled. It showed a satisfactory shape retaining property after absorbing the saline solution.

Example 3

One hundred (100) parts by weight of absorbent resin particles (A) and 1 part by weight of finely divided water-insoluble silica (produced by Japan Aerosil Corp. and marketed under trademark designation of "Aerosil 200") were uniformly mixed. The resultant mixture was further mixed uniformly with 2 parts by weight of glycerol. The resultant mixture (K1) comprising absorbent resin particles, Aerosil, and glycerol and 6 parts by weight, based on 100 parts by weight of the absorbent resin particles (A) in the mixture (K1), of ground pulp were dry mixed in a mixer and the produced mixture was molded pneumatically on a wire screen by the use of a batch type pneumatically molding device to obtain a web measuring 150 mm × 300 mm in area and having a basis weight of 763 g/m². The web thus obtained was compressed with a pressure or 5.0 kg/cm² for 15 minutes to obtain a flexible sheetlike absorbent material (c) having a thickness of 1.3 mm. By the use of a gamma ray irradiating device, the absorbent material (c) was treated with a dosage of 25 kGy. The absorbent material (3) thus produced was rated by the same methods as used in Example 1. This absorbent material (3) showed high flexibility (not less than 180 degrees of flexibility), entailed substantially no exfoliation of absorbent resin particles, and could be handled as a one-piece sheet. When the square of 100 mm of this absorbent material (3) was placed in a petri dish 150 mm in diameter and 100 ml of an aqueous 0.9 wt% saline solution was poured in the petri dish, the absorbent material absorbed the saline solution satisfactorily and gelled. It showed ideal shape retaining property after absorbing the saline solution.

Example 4

From the web obtained in Example 3, a flexible sheetlike absorbent material (d) measuring 150 mm × 300 mm in area and having a basis weight of 1043 g/m² and a thickness of 2.5 mm was obtained by spraying water on the web thereby giving a water content of 40 parts by weight to the web, based on 100 parts by weight of the absorbent resin particles (A) in the web. By the use of a gamma ray irradiating device, the absorbent material (d) thus obtained was treated with a dosage of 25 kGy. The absorbent material (4) consequently obtained was evaluated by the same methods as used in Example 1. This absorbent material (4) showed high flexibility (not less than 180 degrees of flexibility), entailed no exfoliation of absorbent resin particles, and could be handled as a one-piece sheet. When the square of 100 mm of this absorbent material (4) was placed in a petri dish 150 mm in diameter and 100 ml of an aqueous 0.9 wt% saline solution was poured in the petri dish, the absorbent material absorbed the saline solution satisfactorily and gelled. It showed ideal shape retaining property after absorbing the saline solution.

## Example 5

One hundred (100) parts by weight of absorbent resin particles (A) and 1 part by weight of finely divided water-insoluble silica (produced by Japan Aerosil Ltd. and marketed under trademark designation of "Aerosil 200") were uniformly mixed. The resultant mixture was further mixed with 6 parts by weight of glycerin. In a molding frame 150 mm × 300 mm, 39 g of the mixture (K2) comprising absorbent resin particles, Aerosil, and glycerin was uniformly spread. The molding frame holding the mixture (K2) was left standing in a constant temperature and humidity bath kept at 45°C and a relative humidity of 80% to impart 18 g of water to the mixture. This treatment produced a flexible sheetlike absorbent material (e) about 2 mm in thickness. By the use of a gamma ray irradiating device, the absorbent material (e) thus obtained was irradiated with a dosage of 30 kGy. The treated absorbent material (5) was evaluated by the same methods as used in Example 1. This absorbent material (5) showed high flexibility (not less than 180 degrees of flexibility), entailed no exfoliation of absorbent resin particles, and could be handled as a one-piece sheet. When the square of 100 mm of this absorbent material (5) was placed in a petri dish 150 mm in diameter and 100 ml of an aqueous 0.9 wt% saline solution was poured in the petri dish, the absorbent material absorbed the saline solution satisfactorily and gelled. It showed ideal shape retaining property after absorbing the saline solution.

## Example 6

The absorbent resin particles (A) were classified to separate absorbent resin particles (B) having a size of 300μm to 212μm. In a molding frame enclosing an area of 150 mm × 300 mm, 40 g of the absorbent resin particles (B) were uniformly spread and 12 g of water was imparted to the absorbent resin particles (B) by spraying by the use of a spray. Consequently, a flexible sheetlike absorbent material (f) about 1.5 mm in thickness was obtained. By the use of a gamma ray irradiating device, the absorbent material (f) thus obtained was irradiated with a dosage of 25 kGy. The treated absorbent material (6) was evaluated by the same methods as used in Example 1. This absorbent material (6) showed high flexibility (not less than 180 degrees of flexibility), entailed no exfoliation of absorbent resin particles, and could be handled as a one-piece sheet. When the square of 100 mm of this absorbent material (6) was placed in a petri dish 150 mm in diameter and 100 ml of an aqueous 0.9 wt% saline solution was poured in the petri dish, the absorbent material absorbed the saline solution satisfactorily

## Referential Example 2 - Synthesis of absorbent resin particles (C)

A cylindrical separable flask having an inner volume of 500 ml was charged with an aqueous monomer solution comprising 8.6 g of sodium salt of 2-sulfoethyl methacrylate, 35.4 g of acrylic acid having 75 mol% thereof neutralized with a sodium salt thereof, 0.07 g (0.06 mol% based on the monomer) of trimethylolpropane triacrylate as a cross-linking agent, and 69 g of water. The aqueous monomer solution in the flask was stirred, nitrogen was blown into the flask to displace the entrapped air in the reaction system, and the temperature of the aqueous monomer solution was elevated to 30°C. Then, 0.5 g of an aqueous 10% sodium persulfate solution and 0.4 g of an aqueous 0.5% L-ascorbic acid were added to the aqueous monomer solution, the stirring was stopped, and the monomer was set polymerizing. Within 15 minutes after the start of polymerization, the inner temperature of the flask rose to 72°C. After the first sign of fall of the inner temperature of the flask was confirmed, the polymerization system was externally heated and kept at 75°C for one hour. A hydrogel-like polymer consequently obtained was finely divided and dried at 150°C for 90 minutes. A dry polymer (ppC) was pulverized by the use of a roll mill and subsequently classified to separate absorption resin particles (C) having a size of 600 to 150μm. The absorption capacity of the absorbent resin particles (C) under load was found to be 20 ml/g.

## Example 7

One hundred (100) parts by weight of absorbent resin particles (C) and 5 parts by weight of ethylene glycol were uniformly mixed. In a molding frame enclosing an area of 150 mm × 300 mm, 38 g of the resultant mixture was uniformly spread. The molding frame holding the spread mixture was left standing in a constant temperature and humidity bath kept at 45°C and a relative humidity of 80% to impart 4.5 g of a water content to the mixture. Consequently, a flexible sheetlike absorbent material (g) about 1.5 mm in thickness was obtained. By the use of a gamma ray irradiating device, the absorbent material (g) thus obtained was irradiated with a dosage of 30 kGy. The treated absorbent material (7) was evaluated by the same methods as used in Example 1. This absorbent material (7) showed high flexibility (not less than 120 degrees of flexibility), entailed substantially no exfoliation of absorbent resin particles, and could be handled as a one-piece sheet. When the square of 100 mm of this absorbent material (7) was placed in a petri dish 150 mm in diameter and 100 ml of an aqueous 0.9 wt% saline solution was poured in the petri dish, the absorbent material absorbed the saline solution satisfactorily and gelled. It showed satisfactory shape retaining property after absorbing the saline solution.

Referential Example 3 - Synthesis of absorbent resin particles (D)

In 472 g of an aqueous solution of a monomer comprising 25 mol% of acrylic acid and 75 mol% of sodium acrylate (monomer concentration 30% by weight), 0.16 g (0.02 mol% based on the monomer) of polyethylene glycol diacrylate (average polymerization degree of polyethylene glycol moiety 8) as a cross-linking agent and 0.19 g of sodium persulfate as a polymerization initiator were dissolved by stirring at room temperature. Further, nitrogen gas was blown in the resultant solution to expel dissolved oxygen. Separately, in a flask having an inner volume of 2000 ml, provided with a reflux condenser, and having the inner system thereof preparatorily subjected to nitrogen displacement, 1000 ml of cyclohexane and 4 g of sorbitan monostearate as a surfactant were stirred and heated at 40° to 45°C to dissolve the surfactant. Subsequently, the aforementioned aqueous monomer solution containing the polymerization initiator was added dropwise to the surfactant solution and suspended therein. When the bath temperature was elevated and kept at 55°C, the inner temperature of the flask suddenly rose and, within the span of 10 minutes thence, reached the polymerization peak. Then, by elevating the bath temperature, the inner temperature of the flask was kept at 70°C to continue the reaction for 100 minutes. The suspension of polymer consequently obtained was separated by filtration. A granular hydrogel-like polymer thus separated was placed in a reduced-pressure drier. It was heat-treated at a temperature in the range of 80 to 90°C to expel cyclohexane and water and obtain absorbent resin particles (D) having an average particle diameter of about 80μm.

Example 8

A flexible sheetlike absorbent material (h) having a thickness of about 1.5 mm was obtained by repeating the procedure of Example 6 while using absorbent resin particles (D) in the place of the absorbent resin particles (B). By the use of a gamma ray irradiating device, the absorbent material (h) thus obtained was irradiated with a dosage of 25 kGy. The treated absorbent material (8) was evaluated by the same methods as used in Example 1. This absorbent material (8) showed high flexibility (not less than 180 degrees of flexibility), entailed no exfoliation of absorbent resin particles, and could be handled as a one-piece sheet. When the square of 100 mm of this absorbent material (8) was placed in a petri dish 150 mm in diameter and 100 ml of an aqueous 0.9 wt% saline solution was poured in the petri dish, the absorbent material absorbed the saline solution satisfactorily and gelled. It showed ideal shape retaining property after absorbing the saline solution.

Example 9

A laminate sheet (1) was prepared by interposing the absorbent material (1) obtained in Example 1 between two sheets of paper (basis weight 15 g/m2) having a surface area of 150 mm × 300 mm. Separately, from a commercially available disposable diaper (produced by Shiseido Co., Ltd. and marketed under trademark designation of "Pimpon Pant L size"), an absorbent piece comprising absorbent resin, fluffy pulp, and absorbent paper was removed through a cut inserted in the longitudinal direction in the center of a waterproof sheet of polyethylene film. The laminate sheet (1) mentioned above was set in place in the chassis of the disposable diaper and the cut in the waterproof sheet was closed with adhesive tape. While the commercially available disposable diaper had a thickness of about 7 mm, whereas the thickness of an absorbent article (1) obtained consequently was about 2.5 mm. When the absorbent article (1) was evaluated by the following method, it absorbed 360 ml of an aqueous saline solution, indicating that it possessed an ample capacity for absorption as a disposable diaper.

[4] Method for evaluation of absorbent article

A baby model furnished with a urination tube was prepared by imitating an infant having a body weight of 10 kg. The baby model was clad with the absorbent article (1) manufactured in Example 9 and an aqueous 0.9 wt% saline solution was discharged through the urination tube onto the absorbent article (1) at a rate of 60 ml/10 sec. This operation of urination was repeated 30 minutes thereafter to find the amount of the saline solution absorbed by the absorbent material until the saline solution leaked from the absorbent article. The leakage of urine from the absorbent article was rated by the amount of the saline solution absorbed.

Example 10

An absorbent material (9) was obtained by repeating the procedure of Example 1 while using an electron beam irradiating device (produced by Iwasaki Electric Co., Ltd. and marketed under product code of "TYPE CB250/15/180L") in the place of the gamma ray irradiating device and treating the absorbent material (a) with a dosage of 20 kGy instead. This absorbent material (9) showed high flexibility (not less than 180 degrees of flexibility), entailed no exfoliation of absorbent resin particles, and could be handled as a one-piece sheet. When the square of 100 mm of this absorbent material (9) was placed in a petri dish 150 mm in diameter and 100 ml of an aqueous 0.9 wt% saline solution was poured in the petri dish, the absorbent material absorbed the saline solution satisfactorily and gelled. It showed ideal shape retaining property after absorbing the saline solution.

Example 11

An absorbent material (10) was obtained by repeating the procedure of Example 6 while using an electron beam irradiating device (produced by Iwasaki Electric Co., Ltd. and marketed under product code of "TYPE CB250/15/180L") in the place of the gamma ray irradiating device and treating the absorbent material (i) with a dosage of 30 kGy instead. This absorbent material (10) showed high flexibility (not less than 180 degrees of flexibility), entailed no exfoliation of absorbent resin particles, and could be handled as a one-piece sheet. When the square of 100 mm of this absorbent material (10) was placed in a petri dish 150 mm in diameter and 100 ml of an aqueous 0.9 wt% saline solution was poured in the petri dish, the absorbent material absorbed the saline solution satisfactorily and gelled. It showed ideal shape retaining property after absorbing the saline solution.

Example 12

An absorbent material (11) was obtained by repeating the procedure of Example 8 while using an electron beam irradiating device (produced by Iwasaki Electric Co., Ltd. and marketed under product code of "TYPE CB250/15/180L") in the place of the gamma ray irradiating device and treating the absorbing material (h) with a dosage of 30 kGy instead.

This absorbent material (11) showed high flexibility (not less than 180 degrees of flexibility), entailed no exfoliation of absorbent resin particles, and could be handled as a one-piece sheet. When the square of 100 mm of this absorbent material (11) was placed in a petri dish 150 mm in diameter and 100 ml of an aqueous 0.9 wt% saline solution was poured in the petri dish, the absorbent material absorbed the saline solution satisfactorily and gelled. It showed ideal shape retaining property after absorbing the saline solution.

Example 13

A highly flexible absorbent article (2) having a thickness of 2.5 mm was obtained by repeating the procedure of Example 9 while using the absorbent material (9) obtained in Example 10 in the place of the absorbent material (1). When this absorbent article (2) was evaluated by the same method as used in Example 9, it absorbed 360 ml of an aqueous saline solution, indicating that it exhibited an ample capacity for absorption as a disposable diaper.

Example 14

A highly flexible absorbent article (3) having a thickness of 2.5 mm was obtained by repeating the procedure of Example 9 while using the absorbent material (11) obtained in Example 12 in the place of the absorbent material (1). When this absorbent article (3) was evaluated by the same method as used in Example 9, it absorbed 360 ml of an aqueous saline solution, indicating that it exhibited an ample capacity for absorption as a disposable diaper.

Example 15

An absorbent web having a thickness of 10 mm, an area of 10 cm × 30 cm, and a density of 0.06 g/cm$^3$ was produced by molding pneumatically 20 parts by weight of commercially available polyacrylate type absorbent fibers (produced by Allied Colloid Corp. and marketed under product code of "F.S.A. Type 101") in a molding frame provided with a mesh screen 10 cm × 30 cm in area. Then, this absorbent fiber web was retained in a constant temperature and humidity bath set under the conditions of 30°C and relative humidity of 90% to adjust the water content thereof at 15% by weight. It was further compressed to a density of 0.1 g/cm$^3$ to induce direct partial adhesion of adjacent absorbent fibers and give rise to an absorbent fiber web having absorbent fibers agglomerated in a planar form. By the use of a gamma ray irradiating device, this absorbent fiber web was treated with a dosage of 25 kGy to obtain an absorbent material (12). The absorbent material (12) showed high flexibility (not less than 180 degrees of flexibility), entailed no exfoliation of absorbent resin particles, and could be handled as a one-piece sheet. When the square of 100 mm of this absorbent material (12) was placed in a petri dish 150 mm in diameter and 100 ml of an aqueous 0.9 wt% saline solution was poured in the petri dish, the absorbent material absorbed the saline solution satisfactorily and gelled. It showed ideal shape retaining property after absorbing the saline solution.

Example 16

In a twin-arm type kneader having an inner volume of 2.5 liters, an aqueous monomer solution comprising 956 g of an aqueous 37% sodium acrylate solution, 113 g of an aqueous 80% acrylic acid solution, and 0.8 g of methylene bis acrylamide was placed as kept stirred and, under an atmosphere of nitrogen gas, 50 g of an aqueous 10% ammonium persulfate solution and 20 g of an aqueous 10% sodium hydrogen sulfite solution were added and the resultant mixture was stirred to effect polymerization of the monomer. After the polymerization, a finely divided hydrogel consequently obtained was dried in a drier kept at 180°C, pulverized, and filtered through a 20mesh metallic net to separate absorbent resin particles which had passed the metallic net. Thus, absorbent resin particles having an average particle diameter of 400μm and a bulk density of 0.3 g/ml. A mixture of 25 g of the absorbent resin particles with 1.5 g of glycerol was molded in the form of a sheet having a thickness of 2.5 mm and an area of 10 cm × 22 cm. The molded sheet was retained in a constant temperature and humidity bath kept under the conditions of 50°C and a relative humidity of 90% for 20 minutes to impart a water content of 4 g to the molded sheet and obtain a sheetlike absorbent material having absorbent resin particles agglomerated in a planar form. By the use of a gamma ray irradiating device, this absorbent material was treated with a dosage of 25 kGy to produce an absorbent material (13). The absorbent material (13) showed high flexibility (not less than 180 degrees of flexibility), entailed no exfoliation of absorbent resin particles, and could be handled as a one-piece sheet. When the square of 100 mm of this absorbent material (13) was placed in a petri dish 150 mm in diameter and 100 ml of an aqueous 0.9 wt% saline solution was poured in the petri dish, the absorbent material absorbed the saline solution satisfactorily and gelled. It showed ideal shape retaining property after absorbing the saline solution.

Referential Example 4 - Synthesis of hydrogel-like polymer (A)

In a mechanical pressure kneader of stainless steel having an inner volume of 75 liters and provided with a hydraulic pressure cover, two Z-shaped vanes, a jacket, and a thermometer (produced by Kurimoto Iron Works, Ltd.), 30 kg of an aqueous monomer solution comprising 70 mol% of sodium acrylate and 30 mol% of acrylic acid (monomer concentration 34% by weight) and 12.6 g (0.07 mol% based on the monomer) of N,N'-methylene bis-acrylamide as a cross-linking agent were placed and nitrogen gas was blown in to displace the entrapped air in the reaction system. The kneader was heated by passing hot water at 30°C through the jacket, the Z-shaped vanes were rotated at 40 rpm to stir the aqueous monomer solution, and 14 g of sodium persulfate and 0.6 g of L-ascorbic acid were added as polymerization initiators to the stirred aqueous monomer solution. After one minute following the addition of the polymerization initiators, the monomer was set polymerizing. After 12 minutes thence, the inner temperature of the kneader reached the polymerization peak of 82°C. Consequently, a granular hydrogel-like polymer was obtained. The temperature of the hot water in the jacket was elevated to 70°C, the hydraulic device was set operating, and the pressure cover was lowered onto the hydrogel-like polymer. The hydraulic pressure was adjusted so as to exert a surface pressure of about 0.4 kg/cm² on the hydrogel-like polymer and the stirring of the polymer by the rotation of the Z-shaped vanes was continued under the load of the hydraulic press for 20 minutes. After the reaction was completed, a granular hydrogel-like polymer (A) was obtained. When the hydrogel-like polymer (A) thus obtained was evaluated by the following method, the average particle diameter of the hydrogel-like polymer (A) on dry basis was 250μm and the water content was 65% by weight.

[5] Average particle diameter of granular hydrogel-like polymer on dry basis

In 1200 g of an aqueous 20 wt% sodium chloride solution, 25 g of a sampled granular hydrogel-like polymer (solids content a wt%) was stirred by rotating a stirrer tip at 300 rpm for 60 minutes. After the stirring, a dispersion consequently formed was thrown into a sieve analyzer (9.5 mm, 2.0 mm, 0.85 mm, 0.60 mm, 0.30 mm, 0.15 mm, and 0.075 mm in mesh size) and then 6000 g of an aqueous 20 wt% sodium chloride solution was slowly poured onto the sieve analyzer to classify the granular hydrogel-like polymer. The masses of granular hydrogel-like polymer retained on the component sieves in consequence of the classification were thoroughly drained and weighed. The meshes of the sieves were each reduced to a sieve mesh R (100) equivalent to 100% by weight of solids in the relevant mass of granular hydrogel-like polymer (on dry basis) in accordance with the following formula 2. The magnitudes of R (100) and the ratios of the weights of the masses of hydrogel-like polymer retained on the sieves to the total weight of the hydrogel-like polymer obtained after the steps of classification and drainage were plotted on a logarithmic probability chart. From the graph consequently obtained, the sieve mesh for which the ratio of 50% by weight was obtained was read out and adopted as the average particle diameter of the sampled granular hydrogel-like polymer on dry basis.

$$R(100)(mm) = \sqrt[3]{\frac{\alpha}{100} \cdot \frac{25}{W}} \times \gamma \ (mm) \quad (2)$$

wherein R (100) is a sieve mesh (mm) reduced to the solids content of 100% by weight in the granular hydrogel-like polymer, w is a total weight (g) of the hydrogel-like polymer after the steps of classification and drainage, and $\gamma$ is a mesh (mm) of the sieve having classified the hydrogel-like polymer swelled in the aqueous 20% sodium chloride solution.

[6] Water content of granular hydrogel-like polymer

In a petri dish, 5 g of a sampled granular hydrogel-like polymer was spread out and dried at 180°C for 120 minutes. The water content of the sampled granular hydrogel-like polymer was determined in accordance with the formula 3 shown below.

$$\text{Water content (wt\%)} = \frac{5\,(g) - B1\,(g)}{5\,(g)} \times 100 \quad (3)$$

wherein B1 is a weight (g) of the granular hydrogel-like polymer after drying.

Example 17

On a flat polytetrafluoroethylene plate, 25 g of the hydrogel-like polymer (A) obtained in Referential Example 3 was spread out and molded in a size having a thickness of about 4 mm and an area of 100 mm × 100 mm. The molded piece was placed in a household electronic range and dried therein by heating for 5 minutes to obtain a sheetlike absorbent material (i) having a granular hydrogel-like polymer agglomerated in a planar form. The absorbent material (i) thus obtained had a water content of 35% by weight and could be handled as a one-piece sheet. It showed high flexibility (not less than 180 degrees of flexibility) and entailed no exfoliation of absorbent resin particles. By the use of a gamma ray irradiating device, the absorbent material (i) was treated with a dosage of 25 kGy. The absorbent material (14) consequently obtained was evaluated by the following method and the same methods as used in Example 1. The absorbent material (14) had a water content of 34% by weight and could be handled as a one-piece sheet. Further, it showed high flexibility (not less than 180 degrees of flexibility) and entailed no exfoliation of polymer. When the absorbent material (14) was placed in a petri dish having a diameter of 150 mm and 100 ml of an aqueous 0.9 wt% sodium chloride solution was poured in the petri dish, the absorbent material (14) satisfactorily absorbed the saline solution and was gelled. It manifested an ideal shape retaining property after absorbing the saline solution.

[7] Water content of absorbent material

In a petri dish, 5 g of a sampled absorbent material was placed and dried therein at 180°C for 120 minutes. The water content of the sampled absorbent material was determined in accordance with the following formula 4.

$$\text{Water content (wt\%)} = \frac{5\,(g) - C1\,(g)}{5\,(g)} \times 100 \quad (4)$$

wherein C1 is a weight (g) of the absorbent material after drying.

Control 2

A sheetlike control absorbent material (2c) having a granular hydrogel-like polymer agglomerated was obtained by repeating the procedure of Example 17 while performing the partial drying treatment in the electronic range for a period of 10 minutes. The sheet like control absorbent material (2c) thus obtained was evaluated by the same methods as used in Example 1. The control absorbent material (2c) had a water content of 14% by weight and could be handled as a one-piece sheet. It showed no flexibility (less than 5 degrees of flexibility). When it was forcibly bent, it shed polymer particles conspicuously. When the control absorbent material (2c) was placed in a petri dish having a diameter of 150 mm and 100 ml of an aqueous 0.9 wt% sodium chloride solution was poured into the petri dish, it absorbed the saline solution and gelled in spite of a low initial speed of absorption.

Control 3

A granular hydrogel-like polymer not agglomerated into one piece but separated into discrete particles was obtained when the procedure of Example 17 was repeated while the partial drying treatment in the electronic range was performed for a period of 2 minutes instead. The hydrogel-like polymer after the treatment had a water content of 60% by weight.

Referential Example 5 - Synthesis of hydrogel-like polymer (B)

In 472 g of an aqueous solution of a monomer comprising 25 mol% of acrylic acid and 75 mol% of sodium acrylate (monomer concentration 30% by weight), 0.39 g (0.05 mol% based on the monomer) of polyethylene glycol diacrylate (average polymerization degree of polyethylene glycol moiety 8) as a cross-linking agent and 0.19 g of sodium persulfate as a polymerization initiator were dissolved by stirring at room temperature. Separately, in a flask having an inner volume of 2000 ml, provided with a reflux condenser, and having the inner system thereof preparatorily subjected to nitrogen displacement, 1000 ml of cyclohexane and 4 g of sorbitan monostearate were stirred and heated at 40° to 45°C to dissolve the surfactant. Subsequently, the aforementioned aqueous monomer solution containing the polymerization initiator was added dropwise to the surfactant solution and suspended therein. When the bath temperature was elevated and kept at 55°C, the monomer was set polymerizing and, within the span of 10 minutes thence, the inner temperature of the flask reached the polymerization peak. Then, by elevating the bath temperature, the inner temperature of the flask was kept at 70°C to continue the reaction for 100 minutes. When the suspension of polymer consequently obtained was separated by filtration, a granular hydrogel-like polymer (B) was obtained. When this hydrogel-like polymer (B) was evaluated by the same method as used in Referential Example 4, it was found to have an average particle diameter of about 100μm on

dry basis and a water content of 70% by weight.

Example 18

On a flat polytetrafluoroethylene plate, 19 g of the granular hydrogel-like polymer (A) obtained in Referential Example 4 was spread out and molded in a size having a thickness of about 3 mm and an area of 100 mm × 100 mm. This mold was placed in a drier keeping in circulation therein of a hot wind formed of a mixture of steam and air and kept at a temperature of 105°C and a dew point of 85°C and was then left standing therein for 8 minutes to obtain a sheetlike absorbent material (j) having a granular hydrogel-like polymer agglomerated in a plana r form. This absorbent material (j) had a water content of 27% by weight and could be handled as a one-piece sheet. It showed high flexibility (not less than 180 degrees of flexibility) and entailed no exfoliation of absorbent resin particles. By the use of an electron beam irradiating device(produced by Iwasaki Electric Co., Ltd. and marketed under product code of "TYPE CB250/15/180L), the absorbent material (j) was treated with a dosage of 30 kGy. An absorbent material (15) consequently obtained was evaluated by the same method as used in Example 17. The absorbent material (15) had a water content of 26% by weight and could be handled as a one-piece sheet. Further, it showed high flexibility (not less than 180 degrees of flexibility) and entailed no exfoliation of polymer. When the absorbent material (15) was placed in a petri dish having a diameter of 150 mm and 100 ml of an aqueous 0.9 wt% sodium chloride solution was poured in the petri dish, the absorbent material (15) satisfactorily absorbed the saline solution and was gelled. It manifested an ideal shape retaining property after absorbing the saline solution.

Example 19

A sheetlike absorbent material (k) having granular hydrogel-like polymer agglomerated in a planar form was obtained by repeating the procedure of Example 17 while using 13 g of the hydrogel-like polymer (B) instead and changing the thickness of the mold of hydrogel-like polymer to about 2 mm and the period of the partial drying treatment in the electronic range to 3.5 minutes.

By the use of the gamma ray irradiating device, the absorbent material (k) was treated with a dosage of 35 kGy. An absorbent material (16) consequently obtained was evaluated by the same method as used in Example 17. The absorbent material (16) had a water content of 38% by weight and could be handled as a one-piece sheet. Further, it showed high flexibility (not less than 180 degrees of flexibility) and entailed no exfoliation of polymer. When the absorbent material (16) was placed in a petri dish having a diameter of 150 mm and 100 ml of an aqueous 0.9 wt% sodium chloride solution was poured in the petri dish, the absorbent material (16) satisfactorily absorbed the saline solution and gelled. It manifested an ideal shape retaining property after absorbing the saline solution.

Example 20

The hydrogel-like polymer (B) obtained at a temperature of about 70°C in Referential Example 5 was packed in a cylindrical container of paper having a diameter of 9 cm and left cooling overnight at normal room temperature to obtain an agglomerate of the hydrogel-like polymer (B) having a thickness of 20 mm. By the use of a gamma ray irradiating device, the agglomerate thus obtained was treated with a dosage of 100 kGy. An absorbent material (17) was consequently obtained. The absorbent material (17) had a water content of 68% by weight, possessed high elasticity, entailed no exfoliation of the hydrogel-like polymer, and could be handled as a one-piece sheet. Further, it absorbed an aqueous 0.9 wt% sodium chloride solution and swelled. It manifested an ideal shape retaining property after absorbing the saline solution.

Example 21

An absorbent material (18) was obtained by repeating the procedure of Example 19 while using the absorbent material (k) instead, changing the gamma ray irradiating device to an electron ray irradiating device (produced by Iwasaki Electric Co., Ltd. and marketed under product code of "TYPE CB250/75/180L"), and changing the dosage to 40 kGy. This absorbent material (18) had a water content of 37% by weight and could be handled as a one-piece sheet. Further, it showed high flexibility (not less than 180 degrees of flexibility) and entailed no exfoliation of polymer. When the absorbent material (18) was placed in a petri dish having a diameter of 150 mm and 100 ml of an aqueous 0.9 wt% sodium chloride solution was poured in the petri dish, the absorbent material (18) satisfactorily absorbed the saline solution and gelled. It manifested an ideal shape retaining property after absorbing the saline solution.

Example 22

A sheetlike absorbent material (19) treated by the irradiation with an electron beam was obtained by repeating the procedure of Example 18 while molding 90 g of the hydrogel-like polymer (A) in a size of 150 mm × 300 mm instead. The absorbent material (19) was evaluated by the same method as used in Example 17. The absorbent material (19) had a water content of 31% by weight and could be handled as a one-piece sheet. Further, it manifested high flexibility (not less than 180 degrees of flexibility) and entailed no exfoliation of polymer. Separately from a commercially available disposable diaper (produced by Shiseido Co., Ltd. and marketed under trademark designation of "Pimpon Pant L size"), an absorbent piece consisting of absorbent resin, fluffy pulp, and absorbent paper was removed through a cut inserted in the longitudinal direction in the center of a waterproof sheet of polyethylene film. The absorbent material (19) mentioned above was set in place in the chassis of the disposable diaper and the cut in the waterproof sheet was closed with adhesive tape to obtain an absorbent article (3). When this absorbent article (3) was evaluated by the same method as used in Example 9, it absorbed 360 ml of a physiological saline solution.

The absorbent material which is obtained by the method of production according to this invention contains no impurities and accordingly enjoys high safety, manifests high flexibility, and possesses ideal absorption characteristics (speed of absorption and capacity for absorption) and further exhibits an excellent shape retaining property before and after absorbing an aqueous liquid. Thus, it finds advantageous utility in various applications which are aimed at absorbing water or moisture. As concrete examples of the applications, absorbent layers in sanitary materials, dew absorbing sheets, agricultural water retaining materials, water stopping agents for earth works, medical sheets, fresh food preserving materials, food drip absorbing materials, and absorbing agents for sundry commodities may be cited. Further, by the method of production according to this invention, the absorbent material mentioned above can be manufactured very easily and inexpensively with high efficiency. The absorbent material which is obtained by the method of production according to this invention possesses ideal absorption characteristics. The absorbent article of this invention which encloses the absorbent material mentioned above therewith is thin and compact and nevertheless possesses absorption characteristics equal to or better than those of the conventional absorbent article. Besides, it abounds in flexibility, fits neatly the contour of an object of use, and provides convenience of use.

## Claims

1. A method for the production of an absorbent material characterized by irradiating a planar agglomerate of absorbent resin particles with an activated energy ray.

2. A method according to claim 1, wherein said planar agglomerate of absorbent resin particles is obtained by performing sequentially (a1) a step of spreading a granular absorbent resin in a planar form of a thickness controlled in the approximate range of 0.3 to 5 mm on a supporting material and (b1) a step of adding to the planar mass of absorbent resin particles formed at the step of (a1) and kept intact in the agglomerated form at least one member selected from the group consisting of water and steam in an amount in the range of 10 to 150 parts by weight, based on 100 parts by weight of said absorbent resin.

3. A method according to claim 1, wherein said planar agglomerate of absorbent resin particles is obtained by performing sequentially (a2) a step of spreading a granular absorbent resin in a planar form of a thickness controlled in the approximate range of 0.3 to 5 mm on a supporting material and (b2) a step of adding to the planar mass of absorbent resin particles formed at the step of (a2) and kept intact in the agglomerated form 3 to 30 parts by weight of water and 5 to 50 parts by weight of a polyhydric alcohol, based on 100 parts by weight of said absorbent resin.

4. A method according to claim 1, wherein said planar agglomerate of absorbent resin particles is obtained by performing sequentially (a3) a step of mixing 1 to 10 parts by weight of a polyhydric alcohol with 100 parts by weight of said granular absorbent resin, (b3) a step of dry mixing the mixture obtained at the step of (a3) with hydrophilic fibers at a ratio of from 1 to 30 parts by weight of said hydrophilic fibers to 100 parts by weight of said absorbent resin in said mixture, and (c3) a step of pneumatically molding said mixture obtained at said step of (b3) in the form of a sheet.

5. A method according to claim 1, wherein said planar agglomerate of absorbent resin particles is obtained by adding to the sheetlike mass obtained in consequence of said steps defined in claim 4 at least one member selected from the group consisting of water and steam in an amount in the range of 10 to 150 parts by weight, based on 100 parts by weight of said absorbent resin in said sheetlike mass.

6. A method according to claim 1, wherein said planar agglomerate of absorbent resin particles is obtained by performing sequentially (a4) a step of mixing 100 parts by weight of said granular absorbent resin with 1 to 10 parts by weight of a polyhydric alcohol and (b4) a step of casting the mixture obtained at said step of (a4) in a planar form of a thickness controlled in the approximate range of 0.3 to 5 mm on a supporting material.

7. A method according to claim 1, wherein said planar agglomerate of absorbent resin particles is obtained by adding to said planar mass of absorbent resin particles formed through said steps defined in claim 6 and kept intact in the agglomerated form at least one member selected from the group consisting of water and steam in an amount in the range of 10 to 150 parts by weight, based on 100 parts by weight of said absorbent resin in said planar agglomerate of absorbent resin particles.

8. A method according to claim 1, wherein said planar agglomerate of absorbent resin particles contains 10 to 70% by weight of water, based on the total weight of said planar agglomerate of absorbent resin particles.

9. A method according to claim 1, wherein said planar agglomerate of absorbent resin particles is obtained by molding a granular hydrogel-like polymer obtained by polymerization and possessed of an ability to absorb an aqueous liquid.

10. A method according to claim 9, wherein said planar agglomerate of absorbent resin particles is obtained by performing sequentially (a5) a step of molding a granular hydrogel-like polymer obtained by polymerization and possessed of an ability to absorb an aqueous liquid in a planar form of a thickness controlled in the approximate range of 0.3 to 20 mm on a supporting material and (b5) a step of decreasing the water content of said hydrogel-like polymer obtained at said step of (a5) and kept intact in the planar form of a hydrogel by at least 10% by weight thereby giving rise to an agglomerate of hydrogel-like polymer having a water content in the range of 20 to 70% by weight.

11. A method according to claim 9, wherein said hydrogel-like polymer has an average particle diameter in the range of 50 to 2,000 $\mu$m on dry basis.

12. A method according to claim 1, wherein said activated energy ray is at least one member selected from the group consisting of a gamma ray and an electron beam.

13. An absorbent article characterized by containing said absorbent material obtained by the method of production set forth in any of claims 1 to 12 in a bag member having at least one side wall thereof formed of a water-pervious sheet.

# FIGURE